# EUROPEAN PATENT APPLICATION

(11) **EP 3 101 939 A1**
(43) Date of publication of application: **07.12.2016**
(21) Application number: 14881160.7
(22) Date of filing: 28.01.2014
(51) Int. Cl.: H04W 16/20

(54) **WIRELESS TERMINAL AND INFORMATION PROCESSING APPARATUS**

(71) Applicant: Fujitsu Limited, Kawasaki-shi, Kanagawa 211-8588 (JP)
(72) Inventor: KAWAI, Hiromitsu, Kawasaki-shi Kanagawa 211-8588 (JP); SHINADA, Yuki, Kawasaki-shi Kanagawa 211-8588 (JP)
(74) Representative: Hutchison, James
(86) International application number: PCT/JP2014/051862
(87) International publication number: WO 2015/114739

(57) **Abstract**

The wireless terminal includes a controller executing a process of monitoring a communication quality in communications using a macro-cell base station, a process of transmitting, to an information processing apparatus, a query with respect to whether a radio measurement process relating to a small-cell base station is necessary when it is detected that the communication quality is degraded to a predetermined range, and the radio measurement process being started when an execution instruction of the radio measurement process is received from the information processing apparatus.

## Description

### [Technical Field]

The present disclosure pertains to a wireless terminal and an information processing apparatus.

### [Background Art]

Recently, utilization of a small-cell is given as a theme of standardization and other equivalent themes. A main utilizing purpose of the small-cell lies in complementing an area (blind zone) difficult for radio waves radiated from a macro-cell to reach. In recent years, in addition to the utilization for complementing the blind zone described above, the small-cell has been used for adding a communication capacity to improve a communication quality in a place disabled from providing the sufficient communication quality to a wireless terminal. Further, over the recent years, with a spread of smartphones, data traffic increases rapidly. A shortage of the communication capacity becomes tangible, and it is therefore considered that an introduction of the small-cell will be accelerated. The small-cell includes a pico-cell and a femto-cell.

A present situation is that only a carrier may install a femto-cell base station forming a femto-cell as one example of the small-cell. Users are limited to install the small-cell freely. With relaxation of regulations, however, there is a tide that the users may freely install the femto-cell base stations under limitation of indoor use.

It might happen that a position of the femto-cell base station installed by the user is not grasped by the carrier. Consequently, when the carrier newly installs the femto-cell base station for improving a state of radio waves in a certain area, interference with the radio waves occurs between the newly installed femto-cell base station and the femto-cell base station already installed by the user as the case may be. When the interference with the radio waves occurs, the carrier is requested to reexamine the position of installing the femto-cell base station as the case may be.

For example, the following is a technology of estimating a position of the base station unknown to the carrier. To be specific, an intensity information receiving unit receives, from a mobile terminal, intensity information indicating a reception intensity of the radio waves received by the mobile terminal from the unknown base station, and a base station identifier of the base station. A mobile terminal position calculating unit calculates, as a position of the mobile terminal, a position contained in position measurement data associated with the intensity information and the base station identifier. A base station position calculating unit calculates a position of the base station, based on the calculated position of the mobile terminal (e.g., Patent document 1).

As a related technology, an information processing apparatus further exists, which includes a reception unit to receive measurement information of a signal intensity from the wireless terminal measuring the signal intensity of a radio signal transmitted from the known base station, and a base station position estimating unit to estimate positional information of the base station, based on the measurement information received by the reception unit (e.g., Patent document 2).

### [Documents of Prior Arts]

### [Patent Documents]

Patent Document 1: Japanese Laid-Open Patent Publication No. 2010-130533
Patent Document 2: Japanese Laid-Open Patent Publication No. 2012-60462

### [Summary of the Invention]

### [Problems to be solved by the Invention]

As described in Patent document 1, in the technology of estimating the position of the base station known to the carrier, it is considered that the wireless terminal executes a radio measurement process pertaining to a target base station at a certain frequency in order to detect the target base station, and thus tries to receive the radio waves from the target base station. In other words, in the technology disclosed in Patent document 1, it is considered to execute the radio measurement process irrespective of a possibility that the target base station exists in the periphery of the wireless terminal.

However, when executing the radio measurement process at a large frequency (at a short interval of the radio measurement process), the wireless terminal iterates the futile radio measurement process in an area in which the target base station does exist in the periphery thereof, resulting in dissipation of electric power as the case may be. On the other hand, when executing at a small frequency (at a long interval of the radio measurement process), the following problem arises. Specifically, the wireless terminal passes through a cell of the target base station during a period from a timing of a certain radio measurement process to a timing of the next radio measurement process, depending on a cell radius of the target base station as the case may be. In this case, the target base station is not detected, and, in addition, the radio measurement process after the passage becomes futile.

It is an object of the present disclosure to provide a technology enabling a reduction of power consumption of a wireless terminal due to a radio measurement process by restraining the wireless terminal from executing the futile radio measurement process.

### [Means for solving the Problems]

One of aspects of the present invention is a wireless terminal including a controller to execute a process of monitoring a communication quality in communications using a macro-cell base station, a process of transmitting, to an information processing apparatus, a query with respect to whether a radio measurement process relating to a small-cell base station is necessary when it is detected that the communication quality is degraded to a predetermined range, and the radio measurement process being started when an execution instruction of the radio measurement process is received from the information processing apparatus.

### [Effects of the Invention]

According to the present disclosure, it is feasible to reduce the power consumption of the wireless terminal due to the radio measurement process by restraining the wireless terminal from executing the futile radio measurement process.

### [Brief Description of the Drawings]

[FIG. 1] FIG. 1 illustrates an example of network architecture to which a position estimating apparatus according to an embodiment is applied.
[FIG. 2] FIG. 2 is an explanatory diagram of a procedure of estimating a position of a small-cell base station by using the position estimating apparatus.
[FIG. 3] FIG. 3 is an explanatory diagram of the procedure of estimating the position of the small-cell base station by using the position estimating apparatus.
[FIG. 4] FIG. 4 is a diagram illustrating an example of a hardware configuration of a base station apparatus usable as a macro-cell base station and a small-cell base station.
[FIG. 5] FIG. 5 illustrates an example of a hardware configuration of a wireless terminal.
[FIG. 6] FIG. 6 illustrates an example of a hardware configuration of the position estimating apparatus.
[FIG. 7] FIG. 7 is an explanatory diagram of functions equipped in the macro-cell base station, the small-cell base station and the position estimating apparatus.
[FIG. 8] FIG. 8 is an explanatory diagram of functions equipped in the wireless terminal.
[FIG. 9] FIG. 9 is a flowchart illustrating a processing example pertaining to a query of the wireless terminal.
[FIG. 10] FIG. 10 illustrates a setting example of a parameter for detecting decrement of throughput.
[FIG. 11] FIG. 11 illustrates a format example of a query message.
[FIG. 12] FIG. 12 is a flowchart illustrating a processing example in which the position estimating apparatus determines whether the measurement is required when receiving the query message.
[FIG. 13] FIG. 13 illustrates an example of area definition information.
[FIG. 14] FIG. 14 illustrates an example of the area definition information.
[FIG. 15] FIG. 15 illustrates an example of a data structure of query status table.
[FIG. 16] FIG. 16 illustrates a format example of a response message (measurement instruction).
[FIG. 17] FIG. 17 is a sequence diagram illustrating an operation of the wireless terminal till starting a radio measurement process since receiving the measurement instruction.
[FIG. 18] FIG. 18 is a flowchart illustrating an example of the radio measurement process executed by the wireless terminal receiving the response message.
[FIG. 19] FIG. 19 is an explanatory sequence diagram of a detailed process in 07 illustrated in FIG. 18.
[FIG. 20] FIG. 20 illustrates a format example of a measurement result message.
[FIG 21] FIG. 21 is a flowchart illustrating a processing example of the position estimating apparatus when receiving the measurement result message.
[FIG. 22] FIG. 22 illustrates an example of a data structure of a measurement result information table.
[FIG. 23] FIG. 23 is an explanatory diagram of an estimation method 1.
[FIG. 24] FIG. 24 is an explanatory diagram of the estimation method 1.
[FIG. 25] FIG. 25 is an explanatory diagram of the estimation method 1.
[FIG. 26] FIG. 26 is an explanatory diagram of an estimation method 2.
[FIG. 27] FIG. 27 is an explanatory diagram of the estimation method 2.
[FIG. 28] FIG. 28 illustrates an example of further using the estimation method 1 with respect to wireless terminals A - C depicted in FIG. 27.
[FIG. 29] FIG. 29 is a flowchart illustrating details of a position estimating process (new estimated area calculating process) in 108 depicted in FIG. 21.
[FIG. 30] FIG. 30 is an explanatory diagram of the new estimated area calculating process (FIG. 29).
[FIG. 31] FIG. 31 is an explanatory diagram of the new estimated area calculating process (FIG. 29).
[FIG. 32] FIG. 32 is an explanatory diagram of the new estimated area calculating process (FIG. 29).
[FIG. 33] FIG. 33 is a flowchart illustrating details of a position estimating process (estimated area update process) in 108 depicted in FIG. 21.
[FIG. 34] FIG. 34 is an explanatory diagram of the estimated area update process (FIG. 33).
[FIG. 35] FIG. 35 is an explanatory diagram of the estimated area update process (FIG. 33).
[FIG. 36] FIG. 36 is an explanatory diagram of the estimated area update process (FIG. 33).
[FIG. 37] FIG. 37 is a sequence diagram pertaining to the position estimation.

### [Mode for Carrying out the Invention]

The following embodiment will describe a wireless terminal given below.
(1) A wireless terminal including a control apparatus (controller) to execute a process of monitoring a communication quality of communications using a macro-cell base station, a process of transmitting, to an information processing apparatus, a query of a radio measurement process with respect to a small-cell base station when it is detected that the communication quality is degraded to a predetermined range, and the radio measurement process being started when an execution instruction of the radio measurement process is received from the information processing apparatus.

The wireless terminal, when it is detected that the communication quality of the communications using the macro-cell base station is degraded to the predetermined range, the query of the radio measurement process with respect to the small-cell base station is transmitted. The wireless terminal starts the radio measurement process when the execution instruction of the radio measurement process with respect to the small-cell base station is obtained in a response given from a network side in response to the query of the radio measurement process with respect to the small-cell base station. An idea of the embodiment such as this occurred to the present inventors based on an empirical rule learned through daily researches and developments performed by the present inventors, the finding being such that a local area exhibiting a decline, to the predetermined range, of the communication quality of the communications using the macro-cell base station is effective as an installation area of the small-cell base station instanced by a femto-cell. To be specific, the inventors of the present invention found out such a property of law that the small-cell base station instanced by the femto-cell installed for supporting a wireless service area may exist in the local area exhibiting the decline, to the predetermined range, of the communication quality of the communications using the macro-cell base station. The wireless terminal may be therefore controlled to start the radio measurement process with respect to the small-cell base station in an area having a possibility of existence of the small-cell base station or an area covering the existence of the small-cell base station, upon the query transmission being triggered by detecting that the communication quality of the communications using the macro-cell base station degrades to the predetermined range. Accordingly, a futile radio measurement process may avoid being executed to a greater degree than executing the radio measurement process at a certain frequency irrespective of the possibility of the existence of the small-cell base station. In other words, power consumption of the wireless terminal due to the measuring process may be reduced.

The wireless terminal adopts a configuration to start the radio measurement process when acquiring the execution instruction as the response to the query. This is derived from the following reason. To be specific, the wireless communications might suffer the decline of the communication quality due to attenuation caused by a distance between a transmission side and a reception side, shields and other equivalent factors, and the quality of the wireless communications might also, however, temporarily degrade due to degrading factors instanced by radio interference and fading. The same is applied to the wireless communications between the macro-cell base station and the wireless terminal. Hence, even when detecting in the wireless terminal that the communication quality of the communications using the macro-cell base station degrades to the predetermined range, this decline of the communication quality is derived from the temporary degrading factors as the case may be. The decline of the communication quality due to the temporary degrading factors is recovered instantaneously by a slight migration of the wireless terminal in some cases. The small-cell base station does not therefore necessarily exist in the periphery of the wireless terminal detecting the decline of the communication quality of the communications using the macro-cell base station. Hence, when implementing a setting that the radio measurement process is executed only under a condition that the decline of the communication quality is detected, such a case might arise that the radio measurement process is executed in a place irrelevant to the small-cell base station. The radio measurement process in such a case brings with respect to a waste of electric power of the wireless terminal. Such being the case, the wireless terminal according to present Example transmits the query when detecting that the communication quality degrades to the predetermined range, and starts the radio measurement process when obtaining the execution instruction as the response to the query. The futile radio measurement process is thereby enabled to avoid being executed to the much greater degree than hitherto.

The embodiment will describe the wireless terminal given below.
(2) In the wireless terminal described in (1), the control apparatus transmits result information of the radio measurement process including an identifier of an small-cell base station to the information processing apparatus or one or more other information processing apparatuses when the identifier of the small-cell base station is obtained from radio waves is received from the small-cell base station in the radio measurement process.

This configuration enables the information processing apparatus to determine whether the execution instruction is transmitted in response to the query, based on existence or non-existence of the identifier of the small-cell base station, which is received from the wireless terminal.

Note that the wireless terminal may transmit the identifier of the small-cell base station to one or more other information processing apparatuses, and the information processing apparatus may access the identifier, saved in one or more other information processing apparatuses, of the small-cell base station and may use this identifier for determining whether the execution instruction needs being transmitted.

The embodiment will further describe the information processing apparatus given below.
(3) The information processing apparatus includes: a storage device to store, per area, information for determination whether a radio measurement process pertaining to a small-cell base station is necessary; and a controller to determine whether information for determination with respect to an area in which a wireless terminal, which detects that a communication quality in communications using a macro cell base station is degraded to a predetermined range, belongs to satisfies a predetermined condition when a query with respect to a necessity of the radio measurement process from the wireless terminal, to execute a process of transmitting an execution instruction of the radio measurement process to the wireless terminal when the predetermined condition is satisfied, and to avoid the process of transmitting the execution instruction when the predetermined condition is not satisfied.

According to the information processing apparatus described above, the wireless terminal receiving the execution instruction starts the radio measurement process, and a restriction is provided to the execution of the radio measurement process in the wireless terminal. It is therefore feasible to reduce the power consumption of the wireless terminal due to the radio measurement process.

The embodiment will still further describe the following information processing apparatus.
(4) In the information processing apparatus in (3) described above, the control apparatus executes the process of transmitting the execution instruction when times of reception of the query with respect to the area in which the wireless terminal belongs to does not reach a predetermined value, the times of reception of query being included in the information for determination with respect to the area in which the wireless terminal belongs to.

This configuration enables the information processing apparatus to check whether the small-cell base station exists in the area concerned, based on a result of the radio measurement process. In other words, when the result of the measuring process in the wireless terminal contains the information contingent to the reception of the radio waves of the small-cell base station, it is feasible to grasp the existence of the small-cell base station in the area concerned.

The embodiment will yet further describe the following information processing apparatus. (5) In the information processing apparatus in (3) described above, the control apparatus executes a process of transmitting the execution instruction when the information for determination with respect to the area in which the wireless terminal belongs to includes information indicating existence of a small-cell base station in the area, and avoids the process of transmitting the execution instruction when the information for determination indicates non-existence of a small-cell base station in the area.

This configuration ensures effectiveness of the radio measurement process of the wireless terminal by executing the process of transmitting the execution instruction when the small-cell base station exists on one hand, and enables a reduction in downlink traffic by avoiding the process of transmitting the execution instruction when the small-cell base station does not exist on the other hand.

An instance that "the information for determination indicates the non-existence of the small-cell base station in the area concerned" encompasses an instance of being stored with the information indicating the non-existence of the small-cell base station and an instance of not being stored with the information indicating the existence of the small-cell base station.

The embodiment will additionally describe the following information processing apparatus. (6) The control apparatus in the information processing apparatus in (5) described above, when a result of the radio measurement process including identifier of a small-cell base station from a wireless terminal that executed the radio measurement process according to the execution instruction, the controller includes the identifier of the small-cell base station in information for determining of an area in which the wireless terminal belongs to, as information indicating existence of the small-cell base station in the area.

This configuration eliminates a necessity for a static setting of the information for determination by making use of the identifier of the small-cell base station, which is contained in the result of the radio measurement process, as the information for determining whether the measurement is needed when giving the query. As a matter of course, the information for determination may be updated based on the static setting.

The embodiment will further additionally describe the following information processing apparatus.
(7) In the information processing apparatus in (3) described above, a plurality of results of the radio measurement process is stored in the storage device, the plurality of results being received from one or two or more wireless terminals, each of which receives the execution instruction, and the plurality of results of the radio measurement process stored in the storage device are referred by one or more other information processing apparatuses to execute a process of estimating a position of a small-cell base station.

This configuration causes the information processing apparatus to collect the results of the radio measurement processes from the wireless terminals in real time on one hand, and enables one or more other information processing apparatuses to execute the position estimating process at a proper timing.

The embodiment will still further additionally describe the following information processing apparatus.
(8) In the information processing apparatus in (3) described above, a plurality of results of the radio measurement process is stored in the storage device, the plurality of results being received from one or two or more wireless terminals, each of which receives the execution instruction, and the controller executes a position estimating process of a small-cell base station using the plurality of results of the radio measurement process stored in the storage device.

Thus, it is feasible to adopt the configuration that the information processing apparatus executes both of the process pertaining to the query and the position estimating process. In this case, the query and the results of the radio measurement processes are transmitted and received between the wireless terminals and the information processing apparatus. The wireless terminal implements an application for the transmission and the reception to and from the information processing apparatus, is thereby enabled to transmit and receive the query, the execution instruction and the result of the radio measurement process to and from the information processing apparatus on an application layer (user data layer). Accordingly, it is possible to avoid altering a mobile communication network used as a transmission path (relay network) between the wireless terminal and the information processing apparatus.

The embodiment will yet further additionally describe the following information processing apparatus.
(9) In the information processing apparatus in (8) described above, each of the plurality of results of the radio measurement process includes a position in which radio waves form the small-cell base station are received by a wireless terminal, and the controller estimates that an area in which a plurality of circles overlap is an area in which the small-cell base station exists, wherein a center of each of the plurality of circles is each of the received position of the radio waves included in the plurality of results, and a radius of each of the plurality of circles is a cell radius of the small-cell base station.

The following are advantages yielded when adopting the configuration in (9) described above. To be specific, according to the technology disclosed in Patent document 1, positions of a mobile equipment are estimated by using an intensity of the radio waves and positioning data of a positioning target base station, which are received from the mobile equipment, and an average of the positions of the mobile equipment is set as a position of the positioning target base station. On the other hand, according to the technology disclosed in Patent document 2, each piece of measured position information of an intensity of a signal from the base station is weighted corresponding to the signal intensity, centroids of the respective weighted pieces of measured position information are estimated as positional information of the base station concerned. Thus, in each of the technologies of Patent document 1 and Patent document 2, the position of the base station is estimated by using the intensity (signal intensity) of the radio waves of the base station. By contrast, according to the configuration in (9) described above, the position of the small-cell base station may be estimated without using the reception intensity of the radio waves.

The embodiment will furthermore describe the following information processing apparatus. (10) In the information processing apparatus in (8) described above, each of the plurality of results of the radio measurement process includes at least intensity of radio waves that a wireless terminal receives from the small-cell base station, and the controller estimates that an overlapping area in which an area that a plurality of circles overlap is overlapped with one or more divided areas is an area in which the small-cell base station exists, wherein a center of each of the plurality of circles is each of the measured positions of the intensity of the radio waves included in the plurality of results of the radio measurement process, a radius of each of the plurality of circles is a cell radius of the cell radius of the small-cell base station, wherein the one or more divided areas are obtained by: calculating two divided areas is a perpendicular of a straight line connected with two positions selected from the measured positions of the radio waves is a boundary; and selecting one of the two divided areas having stronger intensity of the radio waves within two intensity of the radio waves corresponding to the two positions, the selecting being repeated one or more times based on the number of the measured positions.

The following are advantages yielded when adopting the configuration in (10) described above. According to the technologies disclosed in Patent document 1 and Patent document 2, the accuracy decreases when a bias exists in a distribution of the positions (signal intensity measured positions) of the mobile equipment. In contrast with this, in the configuration in (10) described above, a direction having the existence of the small-cell base station is obtained through selecting the divided area. It is thereby possible to acquire a position estimated result with higher accuracy even when the bias exists in the positions of the wireless terminal than by the technologies disclosed in Patent document 1 and Patent document 2.

The embodiment will still furthermore describe the following information processing apparatus.
(11) In the information processing apparatus in (8) described above, estimated area information indicating an area in which existence of the small-cell base station is estimated is stored in the storage device, wherein the estimated area information is obtained by a result of the position estimating process, and the controller determines whether a size of the estimated area stored in the storage device is smaller than a predetermined value when the result of the radio measurement process is received, avoids executing the position estimating process when the size of the estimated area is smaller than the predetermined value, or executes the position estimating process.

This configuration enables restraint of futility of computing resources of the information processing apparatus by avoiding the position estimating process when the planar dimension of the estimated area is a size matching with a utility purpose of the estimated area.

The embodiment will hereinafter be described with reference to the drawings. A configuration of the embodiment is an exemplification, and the present invention is not limited to the configuration of the embodiment.

### <Network Configuration>

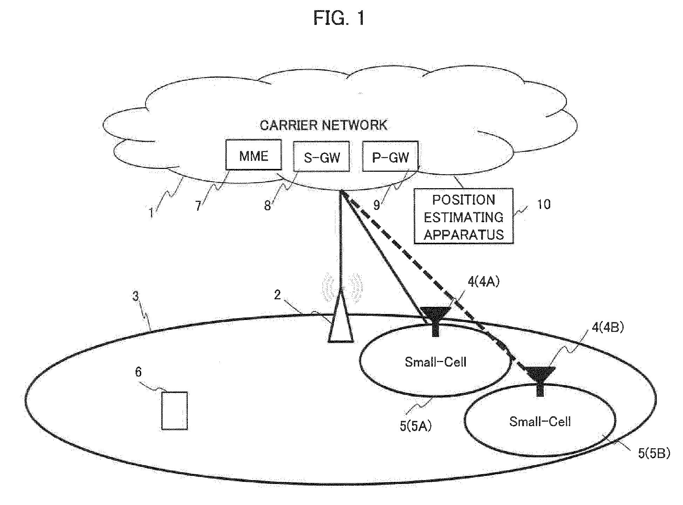

FIG. 1 illustrates an example of configuration of a wireless communication system to which a position estimating apparatus 10 according to the embodiment is applied. An example of system configuration adapted to LTE (Long Term Evolution) or LTE-A (LTE Advanced) is given as one example of the wireless communication system (mobile communication system). The LTE and the LTE-A will hereinafter be generically termed the "LTE".

FIG. 1 depicts a communication common carrier network (which will hereinafter be simply termed a "carrier network") 1, a macro-cell base station apparatus (which will hereinafter be simply termed a macro-cell base station) 2, a small-cell base station apparatus (which will hereinafter be simply termed a small-cell base station) 4, a wireless terminal 6, and the position estimating apparatus 10. The position estimating apparatus 10 is one example of an "information processing apparatus".

The LTE network (one example of the mobile communication network) includes a wireless network and a core network connected to the wireless network. The wireless network is called Evolved Universal Terrestrial Radio Network (eUTRAN). The core network is called Evolved Packet Core (EPC) or a System Architecture Evolution (SAE). The carrier network 1 illustrated in FIG. 1 is the core network, and external networks are connected to the carrier network 1. The external networks include, e.g., the Internet and an Intra network. The macro-cell base station 2 and the small-cell base station 4 are disposed in the wireless network.

The carrier network 1 includes, as main core network apparatuses, a Mobility Management Entity (MME) 7, a Serving Gateway (S-GW) 8, and a Packet Data Network Gateway (P-GW) 9.

The MME 7 is an access gateway on a C-plane (Control Plane) that handles network control. The MME 7 performs sequence control, handover control, position management when the wireless terminal in an idle state (position registration of the wireless terminal), call (Paging) with respect to the base station apparatus (the macro-cell base station 2, the small-cell base station 4) when receiving an incoming call, authentication of the wireless terminal (NAS (Non Access Stratum)), and other equivalent operations.

The S-GW 8 is a gateway that handles user data (user packet), and executes a process of connecting LTE user data to a 2G (e.g.,(GSM), and other equivalent standards) system and a 3G (W-CDMA) system. The P-GW 9 is a gateway for connecting the user data to the external network. The P-GW 9 collects data for accounting, controls Quality of Service (QoS) and performs packet filtering.

The macro-cell base station 2 forms an area (a wireless area which is called a "cell") in which to perform the wireless communications with the wireless terminals 6 by radiating the radio waves. The cell formed by the macro-cell base station 2 is called a macro-cell 3. The macro-cell base station 2 performs wireless communications with the wireless terminal 6, and executes a process of relaying the user data and C-plane control signal between the wireless terminal 6 and the carrier network 1, and other equivalent processes. According to the LTE, the macro-cell base station 2 is called "eNodeB (eNB)".

The "small-cell base station" means a base station that forms a cell (called "small-cell") that a coverage area (wireless area) is smaller than a coverage area of the macro-cell 3 formed by the macro-cell base station 2. The "small-cell base station" includes a femto-cell base station (Access Point Base Station) forming a femto-cell, and a pico-cell base station forming a pico-cell. Described as an example is a case in which the small-cell base station 4 illustrated in FIG. 1 is the femto-cell base station forming the small-cell 5. The small-cell base station 4 may execute the same processes as the macro-cell base station 2 is executable.

The wireless terminal 6 is called User Equipment (UE: mobile equipment) in the LTE. The wireless terminal 6 conducts voice communications and data communications by using the macro-cell base station 2. The wireless terminal 6 may also perform the communications using the small-cell base station 4 under predetermined conditions.

A 3GPP specification "Release 8" according to LTE provides, e.g., a function called Closed Subscriber Group (CSG) with respect to the condition under which the wireless terminal 6 may use the small-cell base station 4. Specifically, a wireless terminal group (CSG) allowed to access a specific base station is set. The wireless terminals belonging to the CSG are allowed to use a cell (called a CSG cell) formed by the specific base station. The general wireless terminals not belonging to the CSG are disabled from using the CSG cell. Thus, a condition with respect to whether the wireless terminal belongs to the CSG may be set as a usability condition for using the small-cell base station 4.

A 3GPP specification "Release 9" extends the CSG function, and provides a mode called a "Hybrid type" (hybrid mode) in addition to the CSG mode to allow only the wireless terminals belong to the CSG to use the CSG cell. The specific base station operating in the hybrid mode transmits broadcast information containing a CSG-ID (an identifier of the CSG cell) and a 1-bit flag indicating that the CSG cell is opened to the general wireless terminals.

The general wireless terminal, upon receiving the broadcast information, treats the CSG cell as the macro-cell and is thereby enabled to perform the communications via the CSG cell. The specific wireless terminal belonging to the CSG may conduct the communications via the CSG cell. Thus, when the specific base station operates in the hybrid mode, not only the wireless terminal belonging to the CSG but also the general wireless terminal may perform the communications using the specific base station.

The CSG may be and may not be set in the small-cell base station 4 according to the embodiment. The small-cell base station 4 may be a base station operating in the CSG mode (including a case of not supporting the hybrid mode) and may also be a base station operating in the CSG mode and the hybrid mode. Note that according to the LTE, the base station installed indoors is referred to as Home eNodeB (HeNB) in relation to the CSG. The small-cell base station 4 may also be the HeNB. However, it does not matter whether the small-cell base station 4 is installed indoors or outdoors.

In the example illustrated in FIG. 1, a small-cell base station 4A and a small-cell base station 4B are depicted as the small-cell base stations 4. The small-cell base station 4A forms a small-cell 5A, and the small-cell base station 4B forms a small-cell 5B.

The macro-cell base station 2 and the small-cell base station 4A are installed by the carrier. The carrier therefore recognizes (grasps) respective positions of the macro-cell base station 2 and the small-cell base station 4A. On the other hand, the small-cell base station 4B is a base station (referred to as a "user base station") installed by a user but is unknown to the carrier.

However, the user base station (the small-cell base station 4B) is not grasped by the carrier but is grasped by the MME 7. Therefore, the positions of the wireless terminals 6 connected to the small-cell base station 4B may be registered, and a handover between the macro-cell base station 2 and the small-cell base station 4B is feasible.

The user base stations are installed in, e.g., urban areas with a large number of buildings causing a decline of environment for the radio waves. For example, it is assumed that the HeNB is installed indoors in the urban area. However, without being limited to the urban area, the user base station may be installed in an area (e.g., a local region) other than the urban area.

In this embodiment, a usage frequency band of the macro-cell base station 2 is different from a usage frequency band of the small-cell base station 4B. This difference is not, however, an indispensable element, and the macro-cell base station 2 and the user base station (the small-cell base station 4B) may use the same frequency band.

The position estimating apparatus 10 is connected to the carrier network 1 via the external network. The position estimating apparatus 10 is a computer (an information processing apparatus) having a communication function, and estimates a position of the base station apparatus like the small-cell base station 4B unknown to the carrier.

The position estimating apparatus 10 performs the communications with the wireless terminal 6 in order to estimate the position. On the occasion of communications, packets containing the user data are transferred bidirectionally on a route such as the position estimating apparatus 10 - the external network - the carrier network 1 (P-GW9, S-GW8) - the base station - the wireless terminal 6, between the position estimating apparatus 10 and the wireless terminal 6.

### <Position Estimating Procedure>

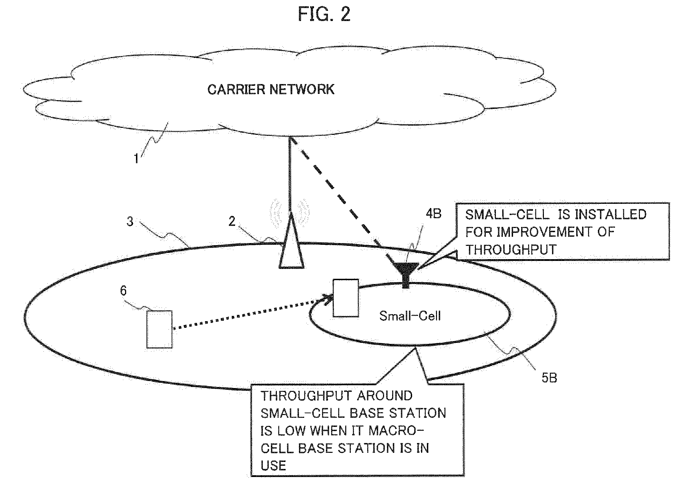

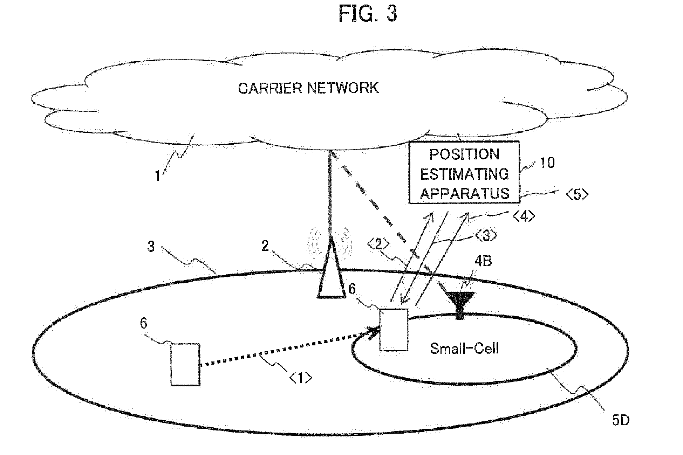

FIGS. 2 and 3 are explanatory views of a procedure pertaining to estimating the position of the small-cell base station according to the embodiment. The user base station is installed for a variety of purposes. For example, the small-cell base station 4B is installed in an area with a throughput being decreased during the communications using the macro-cell base station 2 for the purpose of improving the communication quality (e.g., the throughput). Such a possibility may be therefore considered that the user base station like the small-cell base station 4B exists in the periphery of the position in which to detect the decrease in throughput in the wireless terminal 6 during the communications by using the macro-cell base station 2.

As illustrated in FIG. 3, in the embodiment, the wireless terminal 6 in the process of the communications monitors the throughput by using the macro-cell base station 2 (FIG. 3 <1>). The wireless terminal 6, upon sensing (detecting) the decrease in throughput, transmits a query with respect to whether the small-cell base station exists (the radio measurement process for estimating the position is required (which will hereinafter be termed "measurement necessity") (FIG. 3 <2>). The query is received by the position estimating apparatus 10 via the macro-cell base station 2.

The position estimating apparatus 10 stores information for determining the measurement necessity in response to the query given from the wireless terminal 6. The position estimating apparatus 10, when the information for determination satisfies a predetermined condition upon receiving the query, transmits the execution instruction of (measurement instruction) of the radio measurement process to the wireless terminal 6 defined as the query sender (FIG. 3 <3>). When the information for determination does not satisfy the predetermined condition, the position estimating apparatus 10 does not transmit the measurement instruction (avoids transmitting the measurement instruction). When the measurement instruction is not transmitted, a response to the query is not transmitted. The wireless terminal 6 does not start the radio measurement process when not receiving the measurement instruction.

The wireless terminal 6 receiving the measurement instruction starts the radio measurement process (which will hereinafter be simply termed the "measuring process"). The wireless terminal 6 measures intensity of radio waves received from the small-cell base station 4B in the measuring process. The wireless terminal 6 includes a Global Positioning System (GPS) receiver, and detects a measuring position of the intensity of the received radio waves. The measuring position of the intensity of the received radio waves is also a receiving position of the radio waves. The wireless terminal 6 transmits measurement result information containing at least the intensity of the received radio waves and the measuring position information to the position estimating apparatus 10 (FIG. 3 <4>). In the process for measuring the intensity of the received radio waves, an identifier of the small-cell 5B (small-cell ID) is obtained, in which case the wireless terminal 6 causes the small-cell ID to be contained in the measurement result information.

The measurement result information is transferred to the position estimating apparatus 10 via, e.g., the macro-cell base station 2. Alternatively, the measurement result information may also be transferred to the position estimating apparatus 10 via the small-cell base station 4B after the wireless terminal 6 is connected to the small-cell base station 4B (after the handover).

The position estimating apparatus 10 stores the measurement result information received from one or more wireless terminals 6. The position estimating apparatus 10 estimates the position of the small-cell base station 4B by using plural pieces of measurement result information (FIG. 3 <5>). The information indicating the estimated position of the small-cell base station 4B is used for, e.g., the carrier to install the small-cell base station. The carrier is thereby enabled to know the existence area of the user base station on the occasion examining the installation of the small-cell base station, whereby the small-cell base station may be installed not to cause any interference with the user base station.

### <Example of Hardware Configuration of Base Station>

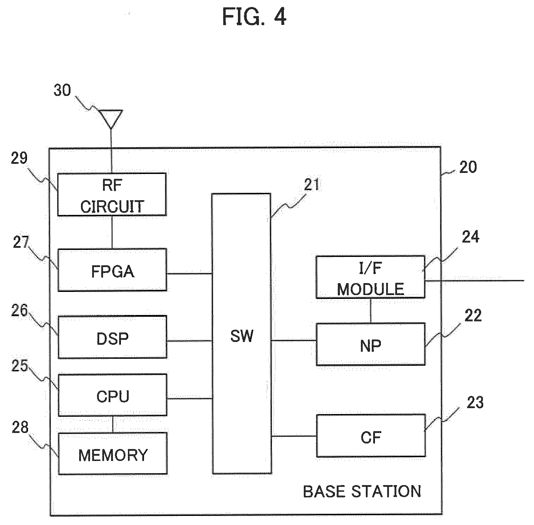

FIG. 4 is a diagram illustrating an example of a hardware configuration of a base station apparatus 20 usable as the macro-cell base station 2 and the small-cell base station 4. In FIG. 4, the base station apparatus 20 (which will hereinafter be referred to as the base station 20) includes an internal switch (SW) 21, a network processor (NP) 22 connected to the internal switch 21, and a compact flash (CF) 23. The NP 22 is connected to an interface module 24 (I/F 24), and the I/F 24 receives a communication line connected to the carrier network 1.

The base station 20 includes a Central Processing Unit (CPU) 25, a Digital Signal Processor (DSP) 26, and an Field Programmable Gate Array (FPGA) 27, which are connected to the SW 21. The CPU 25 is connected to a memory 28. The FPGA 27 is connected to a Radio Frequency (RF) circuit 29. The RF circuit 29 is connected to a transmission/reception antenna 30.

The base station 20 executes processes relating to the U-plane and processes relating to the C-plane (Control plane). The processes pertaining to the U-plane include, e.g., a process of transferring the data (user data) received from the wireless terminal 6 (user) to the carrier network 1 (uplink transmission), and a process of transferring the user data received from the carrier network 1 to the wireless terminal 6 (downlink transmission). The processes relating to the C-plane include transmitting and receiving the control signal to and from the carrier network 1 (MME 7), transmitting and receiving the control signal to and from the wireless terminal 6, and controlling the operation of the base station 20 by using the control signals received from the carrier network 1 and the wireless terminal 6.

The SW 21 manages the process of transmitting and receiving the signals between the circuits connected to the SW 21. The I/F 24 and the NP 22 together function as a line interface with the carrier network 1. The NP 22 executes, e.g., a process (IP protocol process) related to an Internet Protocol (IP) packet in the signals received by the I/F 24 and the IP packet transmitted to the I/F 24. The I/F 24 executes a process of converting the IP packet received from the NP 22 into a signal to be transmitted to the carrier network 1, a process of converting the signal received from the carrier network 1 into the IP packet, and other equivalent processes.

The DSP 26 operates as a BB processing unit that conducts a digital baseband process (BB process) with respect to the user data. For example, the DSP 26 executes a process of converting the user data (IP packet) received from the NP 22 via the SW 21 into the baseband signal (BB signal) by applying digital modulation thereto, and a process of obtaining the user data by executing a demodulation process of the BB signal received from the FPGA 27 via the SW 21.

The FPGA 27 operates as an orthogonal modulation/demodulation unit to execute an orthogonal modulation/demodulation process as an analog BB process. To be specific, the FPGA 27 converts the BB signal into an analog signal by executing an orthogonal modulation process of the BB signal received from the DSP 26 via the SW 21, and transmits the analog signal to the RF circuit 29. On the other hand, the FPGA 27 converts the analog signal into the BB signal by executing an orthogonal demodulation process of the analog signal received from the RF circuit 29, and transmits the BB signal to the DSP 26.

The RF circuit 29 manages wireless processes in the downlink direction (the base station 20 → the wireless terminal 6) and the uplink direction (the wireless terminal 6 → the base station 20). The RF circuit 29 includes an up-converter and a power amplifier (PA) in the downlink direction. The RF circuit 29 includes a low-noise amplifier (LNA) and a down-converter in the uplink direction. The RF circuit 29 includes a duplexer as a component common to the downlink and the uplink, and the duplexer is connected to the transmission/reception antenna 30.

The up-converter up-converts the analog signal (RF signal) received from the FPGA 27 into a frequency of the radio waves. The PA amplifies the up-converted signal. The duplexer connects the amplified signal to the transmission/reception antenna 30, and the transmission/reception antenna 30 radiates the radio waves. The cell is shaped by the radiated radio waves, and the wireless terminal 6 receives the radio waves.

The radio waves received by the transmission/reception antenna 30 are inputted to the LNA via the duplexer, and are low-noise-amplified by this LNA. The low-noise-amplified signal is down-converted by the down-converter into the analog signal (RF signal) having the radio frequency. The down-converted signal is inputted to the FPGA 27.

The memory 28 is one example of a "main storage device" and includes, e.g., a Random Access Memory (RAM) and a Read Only Memory (ROM). The memory 28 is used as a work area of the CPU 25. The CF 23 is one example of "an auxiliary storage device", and stores data used for controlling the operation of the base station 20 and programs that are executed by the CPU 25 and the DSP 26. The data contain such items of information as the cell ID and the usage frequency of the base station 20, these items of information being broadcasted through the broadcast information (synchronization signal and other equivalent signals).

The CPU 25 executes a variety of processes pertaining to the C-plane through the transmission the reception of the control signals (control data) to and from the core network apparatus (MME 7 and other equivalent apparatuses) and the wireless terminal 6. For example, the CPU 25 executes a call process of the wireless terminal 6, and Operation Administration and Maintenance (OAM) process of the base station 20. The CPU 25 controls the transmission of the broadcast information (the synchronization signal and other equivalent signals) of the cell from the transmission/reception antenna 30, and executes processes pertaining to the handover.

### <Example of Configuration of Wireless terminal>

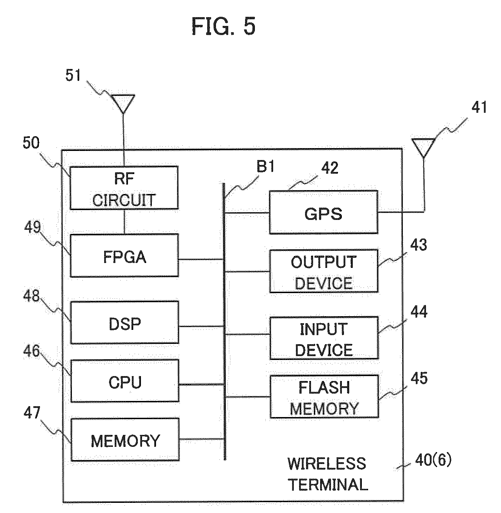

FIG. 5 illustrates an example of a hardware configuration of a wireless terminal 40 applicable to the wireless terminal 6. The wireless terminal 40 includes a GPS receiver (which will hereinafter be simply termed a GPS) 42, an output device 43, an input device 44, a flash memory 45, a CPU 46, a memory 47, a DSP 48, an FPGA 49, and a RF circuit 50, which are interconnected via a bus B1. The GPS 42 is connected to an antenna 41, and the RF circuit 50 is connected to a transmission/reception antenna 51.

The GPS 42 receives the radio waves from a GPS satellite, which are received by the antenna 41, and computes a position of the wireless terminal 40. The output device 43 includes a display device and a voice output device (speaker). The input device 44 includes buttons, keys, and a voice input device (microphone). The flash memory 45 is one example of an "auxiliary storage device", and stores programs executed by the CPU 46 and the DSP 48, and data used when executing the programs.

The CPU 46 executes various categories of programs (applications) stored in the flash memory 45. The wireless terminal 40 thereby implements a variety of functions instanced by a speech function, a Web equipment function and a mail function. The memory 47 is one example of a "main storage device" and is, e.g., ROM/RAM. The memory 47 is used as a work area of the CPU 46.

The DSP 48, similarly to the DSP 26 illustrated in FIG. 4, functions as the BB processing unit to execute the digital baseband process. The FPGA 49, similarly to the FPGA 27 (FIG. 4), functions as the orthogonal modulation/demodulation unit. The RF circuit 50 has the same configuration and function as those of the RF circuit 29, and conducts processes pertaining to radio signals. The transmission/reception antenna 51 transmits and receives the radio signals to and from the base station 20.

In the embodiment, the CPU 46, as the programs run, executes a process of measuring a throughput of the wireless terminal 40 and determining a threshold value, a process of transmitting a query to the position estimating apparatus 10, a process of measuring a reception intensity of the radio waves radiated from the small-cell based on a received measurement instruction, and a process of generating and transmitting measurement result information.

### <Example of Configuration of Position Estimating Apparatus>

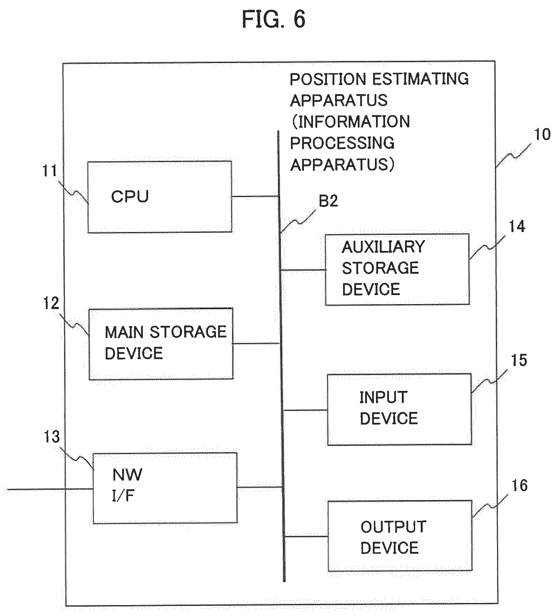

FIG. 6 illustrates an example of a hardware configuration of the position estimating apparatus (information processing apparatus) 10. A general-purpose or dedicated computer (information processing apparatus) instanced by a personal computer (PC), a workstation (WS) and a server machine may be applied to the position estimating apparatus 10. The embodiment will discuss an example that the server machine connected to the carrier network 1 implements the position estimating apparatus 10.

In FIG. 6, the position estimating apparatus 10 includes a CPU 11, a main storage device (memory) 12, a network interface (NW I/F) 13, an auxiliary storage device 14, an input device 15 and an output device 16, which are interconnected via a bus B2.

The input device 15 may include pointing devices instanced by a keyboard and a mouse, and a microphone. The output device 16 includes a display and a speaker. The auxiliary storage device 14 is a nonvolatile storage medium instanced by a hard disk, a flash memory, and a Universal Serial Bus (USB) memory, and stores programs to be executed by the CPU 11 and data used when executing the programs. In the embodiment, the auxiliary storage device 14 stores information for determining whether the measurement is required, measurement result information received from the wireless terminal 6, and position estimation result information of the small-cell base station.

The NW I/F 13 is connected to the network (carrier network 1), and manages a process of transmitting and receiving the IP packet (data) transmitted from the wireless terminal 6. The NW I/F 13 is a communication device called, e.g., a network interface card or a LAN card. The NW I/F 13 is one example of a "communication device". The main storage device 12 is used as a work area of the CPU 11. The main storage device 12 includes the RAM and the ROM.

The CPU 11 loads the programs stored in the auxiliary storage device 14 onto the main storage device 12, and executes the loaded programs. The CPU 11 thereby operates as the position estimating apparatus 10. The CPU 11 carries out a process of determining whether the measurement is required in response to the query received from the wireless terminal 6, a process of transmitting the measurement instruction, a process of receiving the measurement result information, and a process of estimating the position of the small-cell by using the measurement result information.

Note that each of the CPU 25, the CPU 46 and the CPU 11 illustrated in FIGS. 4 through 6 is one example of a "processor", the "processor" is one example of a "control apparatus". Functions executed by the respective CPUs 25, 46, 11 may also be implemented by hardware logics (wired logics) as hardware functioning as the "control apparatus".

The hardware functioning as the "control apparatus" is configured by at least one of, e.g., an electric/electronic circuit, an integrated circuit (e.g., at least of an IC, an LSI and an ASIC (Application Specific Integrated Circuit)), and a PLD (Programmable Logic Device). One piece of hardware may execute a plurality of functions, and plural pieces of hardware may also execute one function.

Each of the CF 23, the memory 28 illustrated in FIG. 4, the flash memory 45, the memory 47 depicted in FIG. 5, and the main storage device 12, the auxiliary storage device 14 illustrated in FIG. 6, is one example of a "storage device" or a "memory" defined as a non-transitory computer readable recording medium.

### <Functional Configurations of Base Station and Position Estimating Apparatus>

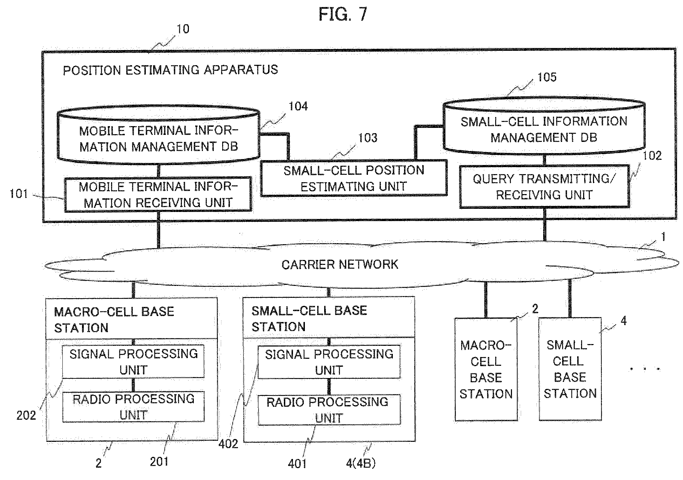

FIG. 7 is an explanatory diagram of functions equipped in the macro-cell base station 2, the small-cell base station 4 (4B) and the position estimating apparatus 10. The macro-cell base station 2 and the small-cell base station 4B have the hardware configuration of the base station 20 depicted in FIG. 4.

Each of the macro-cell base station 2 and the small-cell base station 4B operates as a relay apparatus disposed on a data transfer path between the wireless terminal 6 and the position estimating apparatus 10. The macro-cell base station 2 operates as an apparatus including a radio processing unit 201 and a signal processing unit 202. The small-cell base station 4B operates as an apparatus including a radio processing unit 401 and a signal processing unit 402.

Processes to be conducted by each of the radio processing unit 201 and the radio processing unit 401 are executed by the transmission/reception antenna 30, the RF circuit 29 and the FPGA 27 illustrated in FIG. 4. The processes to be conducted by each of the radio processing unit 201 and the radio processing unit 401 include a process relating to the radio signals received from the wireless terminal 6 and a process of the radio signal transmitted to the wireless terminal 6. Processes to be performed by each of the signal processing unit 202 and the signal processing unit 402 are executed by the SW 21, the DSP 26, the NP 22 and the I/F 24 depicted in FIG. 4. Each of the signal processing unit 202 and the signal processing unit 402 performs processing the signals transmitted and received on the side of the carrier network 1.

The macro-cell base station 2 transfers the query (addressed to the position estimating apparatus 10) coming from the wireless terminal 6 toward the carrier network 1 by using the radio processing unit 201 and the signal processing unit 202, and the position estimating apparatus 10 may receive the query. The macro-cell base station 2 may transfer, to the wireless terminal 6, the measurement instruction (data addressed to the wireless terminal 6) received via the carrier network 1 from the position estimating apparatus 10 by using the signal processing unit 202 and the radio processing unit 201. The macro-cell base station 2 or the small-cell base station 4B transfers the measurement result information (data addressed to the position estimating apparatus 10) received from the wireless terminal 6 toward the carrier network 1, and the position estimating apparatus 10 may receive the measurement result information.

The position estimating apparatus 10 operates as an apparatus including a mobile terminal information receiving unit 101, a query transmitting/receiving unit 102, a small-cell position estimating unit 103, a mobile terminal information management database (mobile equipment DB) 104, and a small-cell information management database (small-cell DB) 105.

The CPU 11 illustrated in FIG. 6 loads a program causing the CPU 11 to operate as the mobile terminal information receiving unit 101 onto the main storage device 12, and executes the loaded program. Processes to be conducted by the mobile terminal information receiving unit 101 include a process of receiving the information (e.g., the measurement result information (the intensity of the received radio waves, the measurement position)) transmitted from the mobile equipment (wireless terminal 6) and received by the NW I/F 13. The mobile equipment DB 104 is built up, e.g., on the auxiliary storage device 14 depicted in FIG. 6, and stores the measurement result information and items of information of the wireless terminal 6 other than the measurement result information.

The CPU 11 depicted in FIG. 6 loads a program causing the CPU 11 to operate as the query transmitting/receiving unit 102 onto the main storage device 12, and executes the loaded program. Processes to be executed by the query transmitting/receiving unit 102 include a process of receiving the query transmitted by the wireless terminal 6 and received by the NW I/F 13, a process of determining, based on the query, whether the measurement is required, and a process of transmitting the measurement instruction corresponding to a determination result. The query transmitting/receiving unit 102, when discovering a new small-cell, registers information of this small-cell in the small-cell DB 105.

The small-cell DB 105 is built up on the auxiliary storage device 14, and stores information (positional information (position estimated result) of the small-cell base station, the cell ID, and other equivalent information) of the user base station (the small-cell base station not grasped by the carrier). In the embodiment, the information stored in the small-cell DB 105 is used as the formation for determining whether the measurement is required. When discovering the new small-cell, the information of this small-cell is registered in the small-cell DB 105.

The CPU 11 illustrated in FIG. 6 loads a program causing the CPU 11 to operate as the small-cell position estimating unit 103 onto the main storage device 12, and executes the loaded program. Processes of the small-cell position estimating unit 103 include a process of estimating the position of the small-cell by use of plural pieces of measurement result information stored in the mobile equipment DB 104. The position estimated result of the small-cell position estimating unit 103 is stored in the small-cell DB 105.

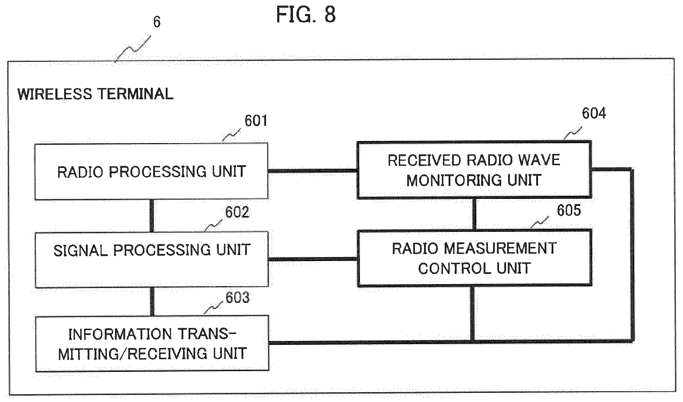

FIG. 8 is an explanatory diagram of the functions equipped in the wireless terminal 6. In FIG. 8, the wireless terminal 6 operates as an apparatus including a radio processing unit 601, a signal processing unit 602, an information transmitting/receiving unit 603, a received radio wave monitoring unit 604, and a wireless measurement control unit 605.

The FPGA 49, the RF circuit 50 and the transmission/reception antenna 51 illustrated in FIG. 5 operate as the radio processing unit 601, and execute the process of the radio signals transmitted to and received from the base station (the macro-cell base station 2 or the small-cell base station 4). The DSP 48 operates as the signal processing unit 602 and executes the process pertaining to the signals transmitted to and received from the position estimating apparatus 10.

The CPU 46 loads a program causing the CPU 46 to operate as the information transmitting/receiving unit 603 onto the memory 47, and executes the loaded program. The CPU 46 thereby manages, as the information transmitting/receiving unit 603, the process of transmitting and receiving the information to and from a communication target apparatus (e.g., the position estimating apparatus 10). Processes to be executed by the information transmitting/receiving unit 603 include, e.g., the process of transmitting the query and the measurement result information, and the process of receiving the measurement instruction.

The CPU 46 loads a program causing the CPU 46 to operate as the received radio wave monitoring unit 604 onto the memory 47, and executes the loaded program. The CPU 46 thereby monitors, as the received radio wave monitoring unit 604,a throughput by using the received radio waves received by the radio processing unit 601. The CPU 46 operating as the received radio wave monitoring unit 604 makes a query request for the wireless measurement control unit 605 when detecting the throughput equal to or smaller than or under a preset threshold value (stored in the memory 47 or the flash memory 45).

The throughput is calculated by obtaining, e.g., a data size per unit time, of the data received through the received radio waves. A method of monitoring the throughput is not, however, limited to this method. For example, a throughput monitored on a higher-order layer (e.g., TCP/IP) may also be applied.

The CPU 46 loads a program for the CPU 46 operating as the wireless measurement control unit 605 onto the memory 47 and executes the loaded program. The CPU 46 operating as the wireless measurement control unit 605 receives the query request given from the received radio wave monitoring unit 604, and makes the query with respect to whether the measurement is required through the information transmitting/receiving unit 603. The information transmitting/receiving unit 603 generates a query containing, e.g., the identifier of the wireless terminal 6 and the positional information of the wireless terminal 6, which is acquired by the GPS 42, and sends this query to the signal processing unit 602. The query is thereby transmitted from the wireless terminal 6 via the signal processing unit 602 and the radio processing unit 601.

A query result (response) transmitted from the position estimating apparatus 10 is received by the information transmitting/receiving unit 603 via the radio processing unit 601 and the signal processing unit 602. The wireless measurement control unit 605 obtains the query result received by the information transmitting/receiving unit 603, and issues a trigger that triggers a start of the wireless measurement when the query result indicates the measurement instruction.

The trigger is given to the received radio wave monitoring unit 604, and the received radio wave monitoring unit 604 measures the intensity (received radio wave intensity) of the radio waves received from the small-cell base station 4B. The received radio wave intensity is given to the information transmitting/receiving unit 603. The wireless measurement control unit 605 provides the positional information (measurement positional information) of the wireless terminal 6, which is obtained by the GPS 42, to the information transmitting/receiving unit 603. The wireless measurement control unit 605 acquires the cell ID of the small-cell 5B out of the broadcast information received from the small-cell base station 4B, and may provide the cell ID to the information transmitting/receiving unit 603.

The information transmitting/receiving unit 603 generates the measurement result information containing the intensity of the received radio waves, the cell ID and the measurement positional information, and transmits the generated measurement result information to the signal processing unit 602. The measurement result information is transmitted from the wireless terminal 6 via the signal processing unit 602 and the radio processing unit 601.

### <Operational Example>

A detailed operational example relating to the position estimation of the small-cell according to the embodiment will hereinafter be described.

### «Making Query»

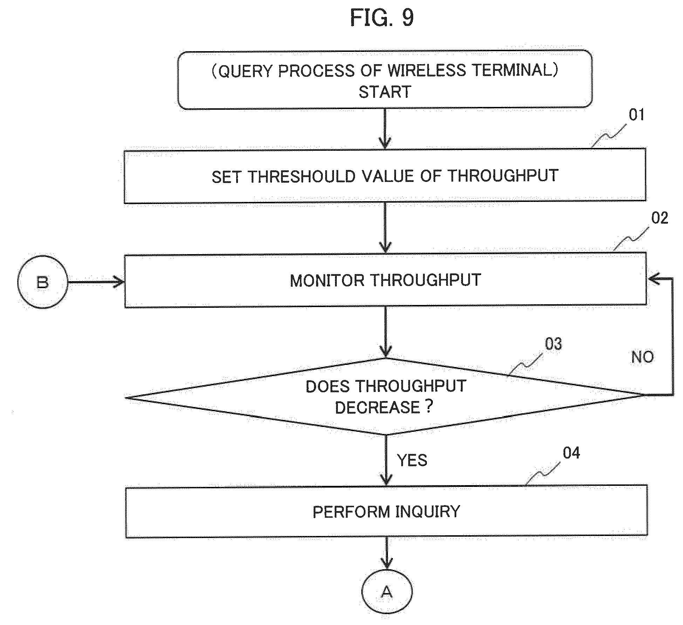

At first, an operation example carried out when the wireless terminal 6 gives a query to the position estimating apparatus 10 is described. FIG. 9 is a flowchart illustrating a processing example pertaining to the query made by the wireless terminal 6. A process illustrated in FIG. 9 is executed upon an event that the CPU 46 starts executing a program (position estimation assist application) for the process pertaining to estimating the position of the small-cell base station, which is stored in the flash memory 45. For example, a start of the execution of the position estimation assist application is triggered by switching ON a power source of the wireless terminal 6 or by inputting the execution instruction from the input device 44.

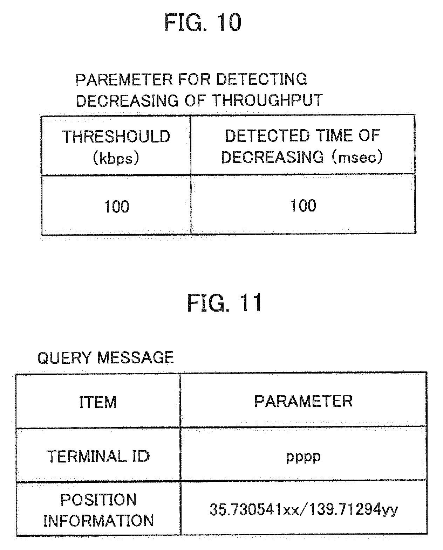

A threshold value of the throughput is set in 01. FIG. 10 illustrates an example of setting a parameter for detecting a decrease in through put. Decrease detecting time is a parameter for excluding such a case that the throughput instantaneously decreases under the threshold value. The decrease in throughput is detected when a period of time for which the throughput decreases under the threshold value is longer than the decrease detection time.

The process in 01 is executed by the CPU 46 operating as the wireless measurement control unit 605. For example, the process in 01 is executed upon such an event that the CPU 46 sets the parameter (FIG. 10) for detecting the decreases in throughput, which is previously stored in the flash memory 45, in an area (e.g., a predetermined storage area on the memory 47) to which the CPU 46 may refer. The process in 01 may be, however, omitted on condition that the parameter for detecting the decreases in throughput is previously stored in a storage location to which the CPU 46 may refer when starting executing the position estimation assist application. For instance, the parameter for detecting the decreases in throughput may be set by using the input device 44 when setting up a configuration of the position estimation assist application.

In 02, the CPU 46 operating as the received radio wave monitoring unit 604 monitors the throughput. The wireless terminal 6 is connected to the macro-cell base station 2 (the wireless terminal 6 resides in the macro-cell 3), and performs the communications using the macro-cell base station 2, during which the process in 02 is executed.

In 03, the CPU 46 operating as the received radio wave monitoring unit 604 determines whether the throughput decreases. In other words, the CPU 46 determines whether a throughput measurement result satisfies the throughput decrease detection condition. Specifically, the CPU 46 determines whether the time for which the throughput is equal to or smaller than the threshold value increases above the decrease detection time.

When not satisfying the throughput decrease detection condition (03, NO), the processing loops back to 02. Whereas when satisfying the throughput decrease detection condition (03, YES), the query request is issued, and the CPU 46 operating as the wireless measurement control unit 605 performs inquiry.

The CPU 46 operates as the information transmitting/receiving unit 603 and generates a query message. FIG. 11 depicts a format example of the query message. The query message contains an identifier (equipment ID) of the wireless terminal 6, and the positional information of the wireless terminal 6, which is obtained by the GPS 42. The equipment ID is stored beforehand in the flash memory 45 or the memory 47. The CPU 46 generates the IP packet containing the query message. An IP address of the position estimating apparatus 10 is already known to the wireless terminal 6 and is set in a destination IP address of the IP packet.

The IP packet is dealt with as the user data in the signal processing unit 602 and is converted into the BB signal. The BB signal is converted into the radio signal (radio wave) in the radio processing unit 601, and the radio signal is transmitted. The radio signal is received and converted into the BB signal by the radio processing unit 201 of the macro-cell base station 2. The BB signal is converted into the IP packet by the signal processing unit 202, and the IP packet is transmitted. The IP packet (query message) is received by the NW I/F 13 of the position estimating apparatus 10 via the carrier network 1 and the external network, and is handed over to the CPU 11.

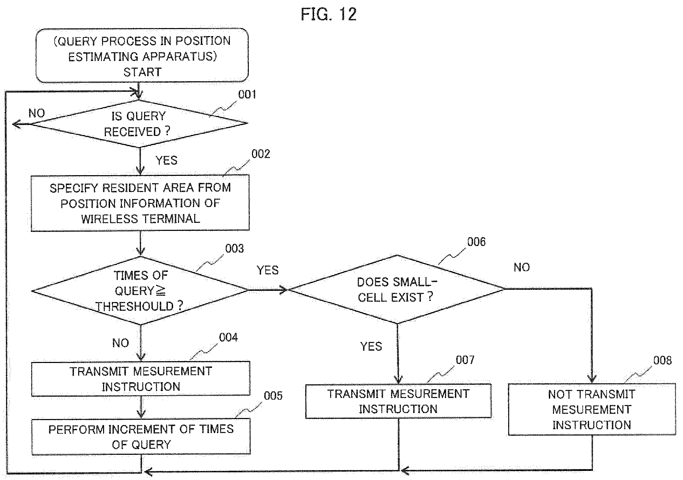

FIG. 12 is a flowchart illustrating a processing example of determining whether the measurement by the position estimating apparatus 10 is required when receiving the query message. A process (query process) illustrated in FIG. 12 is executed by the CPU 11 operating as the query transmitting/receiving unit 102. When starting the process illustrated in FIG. 12, the CPU 11 is in a standby status for the query message (001).

When receiving the query message (001, YES), the CPU 11 specifies a resident area (to which the wireless terminal belongs) of the wireless terminal 6 from the positional information, contained in the query message, of the wireless terminal 6 (002). Herein, area definition information is previously stored in the auxiliary storage device 14 or the main storage device 12 of the position estimating apparatus 10.

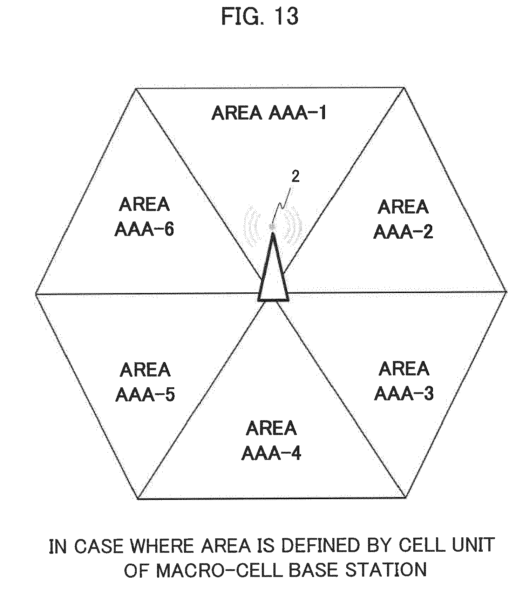

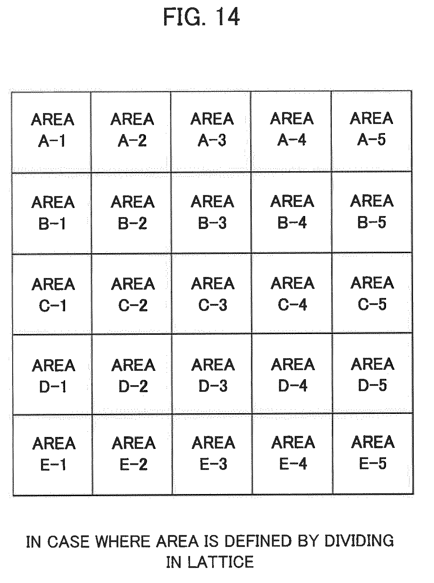

FIGS. 13 and 14 illustrate examples of the area definition information. FIG. 13 illustrates the example of defining the areas on a cell-by-cell basis of the macro-cell base station 2. The example depicted in FIG. 13 is that a macro-cell 3 (defined by a hexagon) formed by the macro-cell base station 2 is equally divided into six triangles with the macro-cell base station 2 being centered, and each triangle is defined as one area. The example illustrated in FIG. 14 is that communication areas divided in lattice irrespective of the position of the macro-cell base station 2, and each latticed portion is defined as one area. An area size may be properly set. An area definition method is not, however, limited to the definitions illustrated in FIGS. 13 and 14.

In 002, the CPU 11 deduces the area, to which the positional information (a coordinate of the position) of the wireless terminal 6 belongs, from the area definition information. From 003 onward, the CPU 11 refers to a query status table 105A, and thus determines whether the wireless measurement is required.

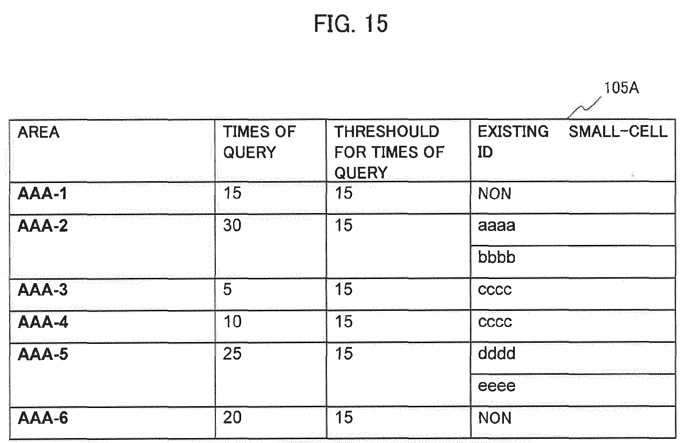

FIG. 15 illustrates an example of a data structure of the query status table 105A (table 105A). The small-cell DB 105 contains the query status table 105A. The table 105A may be stored in a storage area other than the storage area of the small-cell DB 105 in the auxiliary storage device 14, and may also be stored in the main storage device 12.

The table 105A has a plurality of entries prepared per area. Items of information stored in the respective entries are used as the determination information for determining whether the measurement is required on an area-by-area basis. A "query count", a "threshold value of query count" and an "existing small-cell ID" are stored in the respective entries. The "query count" indicates a reception count of the query messages from the single or the plurality of wireless terminals 6. The reception count is a gross number regardless of the sender wireless terminals The "threshold value of query count" is a threshold value used for determining whether the measurement instruction is issued. When the small-cell ID is clarified, this small-cell ID is stored as information indicating the existence of the small-cell in the "existing small-cell ID" field. As long as the small-cell ID is not stored, information (value) indicating "nothing (non-existence)" is stored therein.

Referring back to FIG. 12, in 003, the CPU 11 refers to the entry of the area, specific in 001, of the table 105A, thereby determining whether the query count is equal to or larger than the query threshold value. When the query count is smaller than the threshold value (003, NO), the CPU 11 executes the process of transmitting the measurement instruction (004).

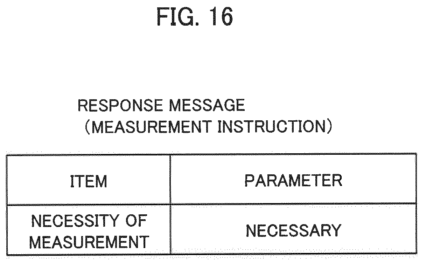

As the measurement instruction transmitting process, the CPU 11 generates a response message containing an instruction of measuring the intensity of the received radio waves of the small-cell. FIG. 16 depicts a format example of the response message. The CPU 11 generates the IP packet containing the response message. At this time, a sender IP address (i.e., the IP address of the wireless terminal 6) of the IP packet containing the query message is set in the destination IP address. The IP packet is transmitted from the NW I/F 13 and is received by the query originator wireless terminal 6 via the external network, the carrier network 1 and the macro-cell base station 2.

Thereafter, the CPU 11 increments the associated query count in the table 105A (005), and loops the processing back to 001.

When the query count is equal to or larger than the threshold value (003, YES), the CPU 11 determines whether the small-cell ID is stored by referring to the "existing small-cell ID" in the entry. In other words, the CPU 11 determines whether the information indicating the existence of the small-cell base station is stored (006). When the small-cell ID is stored(006, YES), the CPU 11 executes the process of transmitting the measurement instruction (007). Upon finishing the process in 007, the processing loops back to 001.

In 006, when the small-cell ID is not stored (006, NO), the CPU 11 determines not to transmit the measurement instruction (008). At this time, the CPU 11 executes none of the process (the CPU 11 avoids the response message transmission process). The response message is not transmitted, downlink traffic is reduced. However, a configuration of transmitting the response message containing information indicating non-necessity for the measurement process to the wireless terminal 6, is adopted as the case may be. Thereafter, the processing loops back to 001.

In the processing example of FIG. 12, the CPU 11 uses the entry of the area in which the wireless terminal 6 is located as the information determining whether the measurement is required. When the query reception count is smaller than the threshold value (does not reach a predetermine value), the measurement instruction is transmitted mainly for the purpose of checking the existence of the small-cell base station.

When the query reception count is equal to or larger than the threshold value (reaches the predetermined value), the measurement instruction is transmitted on condition that the information (small-cell ID) indicating the existence of the small-cell base station is stored. This intends to estimate the position of the small-cell base station or to update the position estimated result by obtaining the new measurement result information. When the query reception count is equal to or larger than the threshold value and when the small-cell ID is not stored, the measurement instruction is not transmitted. The small-cell ID is not obtained from the measurement result information while the reception count is smaller than the threshold value, in which case the small-cell base station is deemed not to exist in the area concerned.

Due to the measurement instruction is not transmitted, the wireless terminal 6 thereby avoids the measurement process. The avoidance of the measurement described above enables the reduction of the power consumption of the wireless terminal 6. Note that in the determination process in 006, the information ("nothing") indicating the non-existence of the small-cell base station is stored, whereby the measurement instruction transmitting process may be avoided.

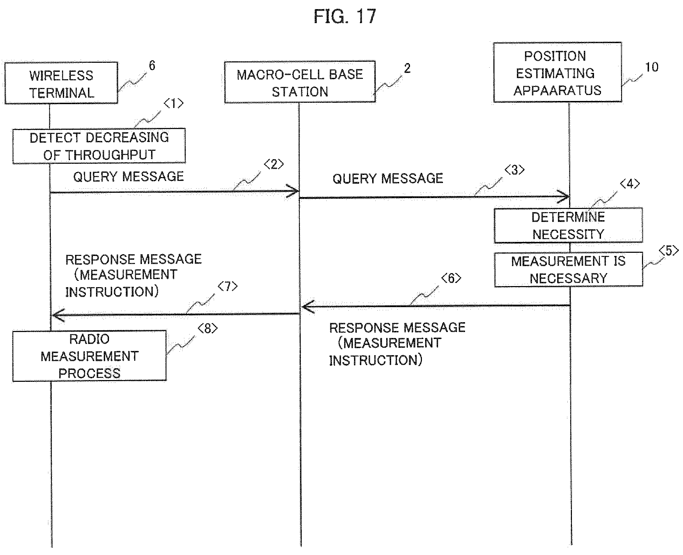

FIG. 17 is a sequence diagram indicating operations till starting the measurement process since the wireless terminal 6 has received the measurement instruction. In FIG. 17, the wireless terminal 6, when detecting the decrease in throughput in the process illustrated in FIG. 9 (FIG. 17<1>), transmits the query (FIG. 17<2>). The query is received by the position estimating apparatus 10 via the macro-cell base station 2 (FIG. 17<3>).

The position estimating apparatus 10 determines whether the measurement is required in the process illustrated in FIG. 17 (FIG. 17<4>), and transmits the response message containing the measurement instruction (FIG. 17<6>) when determining that the measurement is required (FIG. 17<5>). The response message containing the measurement instruction is transmitted (FIG. 17<6>). The measurement instruction is received by the wireless terminal 6 via the macro-cell base station 2 (FIG. 17<7>). The wireless terminal 6 executes the radio measurement process (FIG. 17<8>).

### «Radio measurement process»

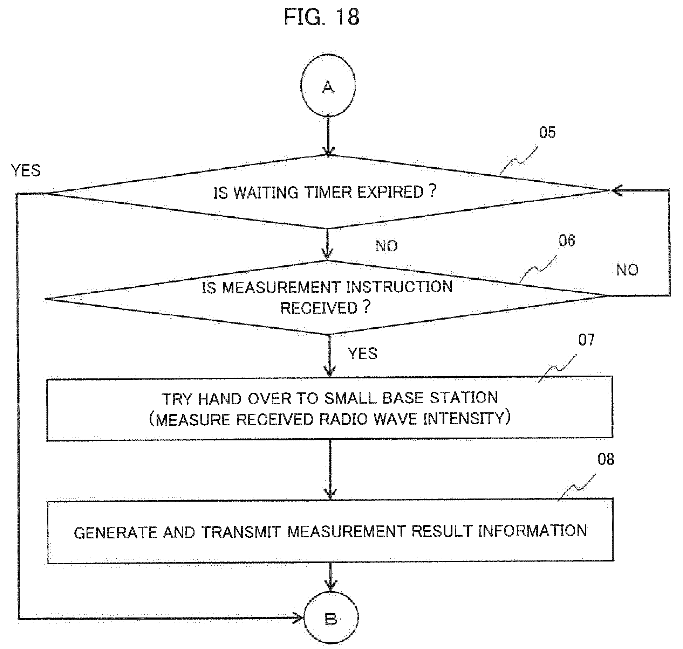

FIG. 18 is a flowchart illustrating an example of the radio measurement process executed by the wireless terminal 6 receiving the response message. The CPU 46 operating as the information transmitting/receiving unit 603, after transmitting the query message in 04 of FIG. 9, starts measuring the time by a standby timer standing by for a predetermined period of time, and comes to a standby status for the query message (05, 06). Upon expiration of the standby timer, the processing loops back to 02.

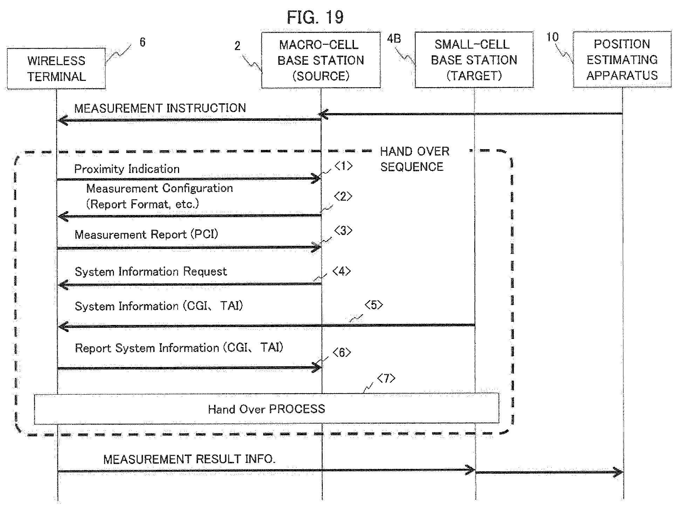

On the other hand, when receiving the response message (measurement instruction) before the standby timer expires (06, YES), the CPU 46 operates as the wireless measurement control unit 605, and tries the handover to the small-cell base station 4B from the macro-cell base station 2 as the measuring process for estimating the position (07). FIG. 19 is an explanatory sequence diagram illustrating details of the process in 07.

In FIG. 19, the wireless terminal 6 receiving the measurement instruction executes the measuring process for estimating the position in the following procedure. To begin with, the wireless terminal 6 executes the process of detecting (searching) the radio waves radiated from the user base station. At this time, the wireless terminal 6 may receive the radio waves from the small-cell base station 4B as far as being located in the periphery of the small-cell base station 4B.

The wireless terminal 6, when located in the periphery of the small-cell base station 4B, receives a synchronization signal (SS) for the cell search, which is transmitted from the small-cell base station 4B. The wireless terminal 6 acquires a physical cell ID (PCI) of the small-cell base station 4B by receiving the synchronization signal.

Next, the wireless terminal 6 executes a handover sequence in the following procedure. The handover sequence indicated in FIG. 19<1> - <7> is a normal handover sequence performed between the macro-cell base station and the HeNB (CSG cell). The wireless terminal 6, in the periphery of the small-cell base station 4B serving as a handover destination candidate, transmits a message called "Proximity Indication" toward the macro-cell base station 2 (FIG. 19<1>).

The handover source base station (macro-cell base station 2) transmits a message "Measurement Configuration" containing control information instanced by a measurement report format to the wireless terminal 6 (FIG. 19<2>). The wireless terminal 6 generates, based on the control information, a measurement report message "Measurement Report" containing the PCI of the small-cell base station 4B, and transmits the generated message to the macro-cell base station 2 (FIG. 19<3>).

The macro-cell base station 2 sends a system information request message "System Information Request" of the handover candidate (small-cell base station 4B) to the wireless terminal 6(FIG. 19<4>). The wireless terminal 6 obtains the system information by receiving report information (system information message "System Information (SI)") reported from the handover candidate (small-cell base station 4B) (FIG. 19<5>).

The message IS contains a Cell Global Identity (CGI), a Tracking Area Identity (TAI), a CSG-ID, and an MS (MS). The CGI is an identifier for uniquely identifying the cell all over the world. The TAI is an area unit for registering the position according to the LTE. The CSG-ID is an identifier of the CSG.

Herein, the small-cell base station 4B operates in the hybrid mode, and the message IS contains information (1 bit indicating the hybrid mode) indicating that the cell is opened to the users (wireless terminals 6) not belonging to the CSG. The wireless terminal 6 is thereby enabled to perform the handover to the small-cell base station 4B irrespective of whether the wireless terminal 6 belongs to the CSG.

The wireless terminal 6 transmits a message "Report System Information" for reporting the CGI, TAI and other equivalent information contained in the message IS to the handover source (macro-cell base station 2) (FIG. 19<6>). Thereafter, the handover process is carried out (FIG. 19<7>).

In the handover process, the macro-cell base station 2 may uniquely identify the handover destination base station (small-cell base station 4B) from the CGI and the TAI transmitted from the wireless terminal 6. The macro-cell base station 2 therefore transfers a user equipment context (UE context) to the small-cell base station 4B and the MME 7. The macro-cell base station 2 transmits the handover instruction to the wireless terminal 6. The wireless terminal 6, upon finishing the handover process, sends a completion report to the small-cell base station 4B. A post-handover process is carried out among the macro-cell base station 2, the small-cell base station 4B and the MME 7, thereby completing the handover.

In the wireless terminal 6, the received radio wave monitoring unit 604 measures the intensity of the received radio waves when the radio processing unit 601 receives the radio waves (broadcast information) of, e.g., the message SI received in the handover sequence. The CPU 46 operating as the wireless measurement control unit 605 obtains the positional information (measurement position) of the wireless terminal 6, which is detected by the GPS 42. The CGI obtained in the handover sequence is obtained as the small-cell ID. These items of information are provided to the information transmitting/receiving unit 603.

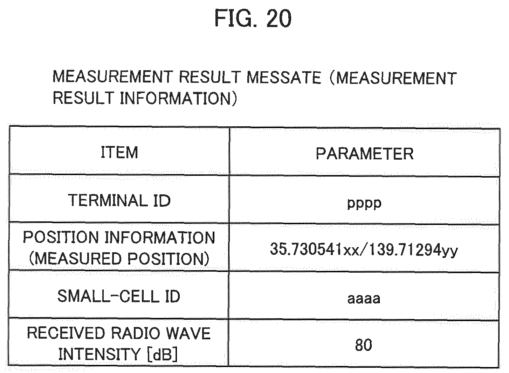

The CPU 46 operating as the information transmitting/receiving unit 603 generates a message (measurement result message) containing the measurement result information. FIG. 20 illustrates a format example of the measurement result message. As depicted in FIG. 20, the measurement result message contains an identifier (equipment ID) of the wireless terminal 6, the positional information (position of measuring the intensity of the received radio waves), the small-cell ID (CGI), and the intensity of the received radio waves.

The information transmitting/receiving unit 603 generates the IP packet containing the measurement result message. The IP packet is transmitted from the wireless terminal 6 via the signal processing unit 602 and the radio processing unit 601, and is received by the position estimating apparatus 10 via the small-cell base station 4B. Note that the measurement result message may also be transmitted to the position estimating apparatus 10 via the macro-cell base station 2 before completing the handover.

Note that a failure in the handover occurs in the handover process (FIG. 19<7>) when the small-cell base station 4B permits the accesses of only the predetermined users (called a "Closed" mode) and when the wireless terminal 6 does not have an access right to the small-cell base station 4B (the wireless terminal 6 does not belong to the CSG). However, the message SI receiving procedure (FIG. 19<5>) is normally carried out. The wireless terminal 6 is thereby enabled to measure the intensity of the received radio waves and to acquire the small-cell ID (CGI). Accordingly, even when failing in the handover to the small-cell base station 4B, it is feasible to generate the measurement result message containing the parameter illustrated in FIG. 20. In this case, the measurement result message is sent to the position estimating apparatus 10 via the macro-cell base station 2.

By the way, it might happen that the small-cell base station actually does not exist in the periphery of the wireless terminal 6 receiving the measurement instruction. In this case, the wireless terminal 6 is disabled from receiving the radio waves from the user base station even by executing the process of detecting (searching) the radio waves of the small-cell base station. In this instance, the wireless terminal 6 generates the measurement result message in which a value (e.g., "NULL") indicating "nothing" is set in each of the values of the small-cell ID and the received radio wave intensity, and transmits this message to the position estimating apparatus 10.

However, the measurement result message may not be transmitted when the wireless terminal 6 is disabled from receiving the radio waves from the user base station. In this case, the position estimating apparatus 10 sets the standby timer for the measurement result message and is, with the standby timer reaching the expiration, thereby enabled to determine that the user base station does not exist. The uplink traffic may be reduced (effective use of the radio resources allocated to the wireless terminals 6) by not transmitting the measurement result message.

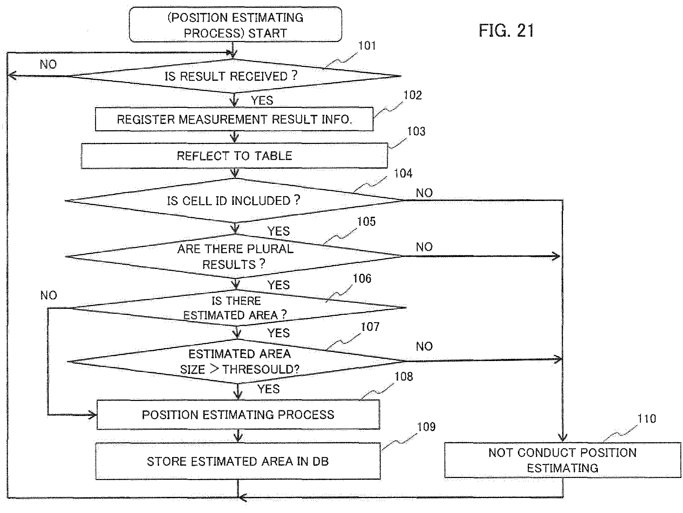

FIG. 21 is a flowchart illustrating a processing example of the position estimating apparatus 10 when receiving the measurement result message. In 101 through 103 of FIG. 21, the CPU 11 operating as the mobile terminal information receiving unit 101 executes the following processes. In 101, the CPU 11 stands by for the measurement result message transmitted from the wireless terminal 6.

When receiving the measurement result message (101, YES), the CPU 11 stores the measurement result information in the measurement result message in the measurement result information table 104A (102). The mobile equipment DB 104 contains the measurement result information table 104A.

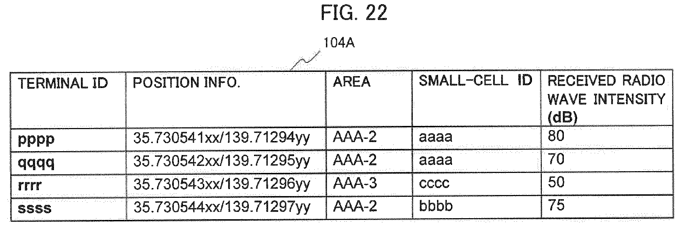

FIG. 22 illustrates an example of a data structure of the measurement result information table 104A (table 104A). The table 104A has a plurality of entries, in which an equipment ID, positional information (measurement position), an area identifier, a small-cell ID and the received radio wave intensity are stored in each entry. Each entry stored in the table 104A is one example of a "record of measurement result". "Nothing (e.g., NULL)" is set as an initial value of the value of the "small-cell ID".

In 102, the CPU 11 stores, in an empty entry of the table 104A, the respective parameters (the equipment ID, the positional information, the small-cell ID and the received radio wave intensity) of the measurement result information received from the wireless terminal 6. At this time, the CPU 11 deduces the area to which the positional information (measurement position) belongs, by using the positional information and the area definition information, and registers an identifier of the deduced area in the entry concerned.

In 103, the CPU 11 reflects the measurement result information in a table 105A (FIG. 15). To be specific, the CPU 11 reads values of the "area identifier" and the "small-cell ID" in the entry that is newly registered in the table 104A. Next, the CPU 11 searches for the entry having the readout area identifier in the table 105A, and refers to a content of this entry.

When the "small-cell ID" value read from the table 104A (the value of the "small-cell ID" in the measurement result information) indicates the small-cell ID (CGI) and when the same small-cell ID is stored in the "existing small-cell ID" in the entry of the table 105A, the CPU 11 does nothing or overwrites with the same small-cell ID.

When a small-cell ID different from the small-cell ID read from the table 104A is stored in the "existing small-cell ID", the CPU 11 stores the small-cell ID read from the table 104A in the "existing small-cell ID" in parallel with the different small-cell ID. Thus, when the plurality of small-cell base stations (user base stations) exist in a certain area, the small-cell IDs of the respective user base stations are registered.

When the "small-cell ID" value read from the table 104A is the small-cell ID (CGI) and when the value of the "existing small-cell ID" in the table 105A indicates "nothing", the CPU 11 rewrites "nothing" with the value of the "small-cell ID". Information indicating that the small-cell base station exists in the area, is thereby stored.

By contrast, when the "small-cell ID" value read from the table 104A is "nothing (NULL)" and when the value of the "small-cell ID" in the entry of the table 105A indicates "nothing", the CPU 11 does nothing or overwrites with "nothing".

Note that the "small-cell ID" value read from the table 104A is "nothing (NULL)", while the small-cell ID is stored in the "existing small-cell ID" in the entry of the table 105A, in which case the CPU 11 does nothing. The small-cell ID therefore remains stored. The small-cell base station exists, and nevertheless the wireless terminal 6 is disabled from receiving the radio waves depending on the measurement position of the wireless terminal 6 as the case may be. This intends to avoid erroneous deletion of the small-cell ID stored in the "existing small-cell ID".

For example, an aging process given below may also be executed with respect to each small-cell ID (CGI) stored in the table 105A. To be specific, when the same small-cell ID as the small-cell ID read from the table 104A is registered in the table 105A, the CPU 11 overwrites with the same value.

The CPU 11 stores final update time (timestamp) per small-cell ID stored in the table 105A. The CPU 11 deletes the small-cell ID, of which the final update time exceeds a predetermined value. When the small-cell ID associated with the area disappears due to the deletion of the small-cell IDs, the CPU 11 sets "nothing" in the value of the "small-cell ID". When the user base station is removed by the aging process described above, actual matching with the contents of the table 105A may be attained.

Alternatively, the query count in the table 105A is reset at a certain timing (e.g., upon the timer expiration, by an operation on the input device 15), and the existence or non-existence of the small-cell base station in each area is rechecked, whereby the actual matching with the contents of the table 105A may be also attained. At this time, resetting may be executed targeting on all the areas and may also be executed on the area-by-area basis.

As described above, in 103, the contents of the measurement result information is reflected in the table 105A, thereby enabling automatic updating of the information for determining whether the measurement is required. As a result, with respect to each area, when the measurement result information containing the small-cell ID is obtained during being smaller than the threshold value, the area concerned is dealt with as an area covering the existence of the small-cell base station. The threshold value for the query becomes larger, there is a higher possibility that the small-cell base station may be found out.

### «Estimation of Position of Base Station»

In 104 through 110, the CPU 11 operating as the small-cell position estimating unit 103 executes the following processes. In 104, the CPU 11 determines whether the entry registered in the table 104A in 102 contains the small-cell ID (whether the measurement result information contains the small-cell ID). When the small-cell ID is not contained (104, NO), the CPU 11 loops the processing back to 101 without executing the position estimating process.

When the entry contains the small-cell ID (104, YES), the CPU 11 determines whether there exist one or more entries stored with the same small-cell ID as the small-cell ID stored in the entry concerned (105). In other words, it is determined whether two or more sets of measurement result information with respect to a certain small-cell base station are stored in the table 104A.

When one or more entries are not detected (105, NO), the position of the small-cell base station is disabled from being estimated. Hence, the CPU 11 loops the processing back to 101 without executing the position estimating process (110).

When the plurality of entries is detected (105, YES), the CPU 11 determines whether an estimated result (estimated area) of the existing position of the small-cell base station having the small-cell ID is stored in the small-cell DB 105 (106). When the estimated area is not stored (106, NO), the processing advances to the position estimating process in 108.

When the estimated area is stored (106, YES), the CPU 11 determines whether a planar dimension (size) of the estimated area stored in the small-cell DB 105 falls within a predetermined range (107). For example, the CPU 11 determines whether the planar dimension of the estimated area is larger than (equal to or smaller than) the threshold value stored beforehand in the auxiliary storage device 14 or the main storage device 12. When the planar dimension of the estimated area is larger than the threshold value (107, YES), the processing advances to the position estimating process in 108.

Whereas when the planar dimension of the estimated area is equal to or smaller than the threshold value (107, NO), the CPU 11 loops the processing back to 101 without executing the position estimating process (110). Thus, when the planar dimension of the estimated area decreases down to a planar dimension conforming with a usage purpose of the estimated position of the small-cell base station, the position estimating process (updating of the estimated area) is stopped. However, the process in 107 is optional.

In 108, the CPU 11 executes the position estimating process of the small-cell base station. In the embodiment, the position of the small-cell base station 4B is estimated by using two estimation method described below.
(Estimation method 1): The method 1 estimates the area covering the existence of the small-cell base station 4B by use of two or more radio wave receiving positions and a cell radius.
(Estimation method 2: The method 2 estimates an existing direction of the small-cell base station 4B by using the intensities of the received radio waves in the two or more radio wave receiving positions.

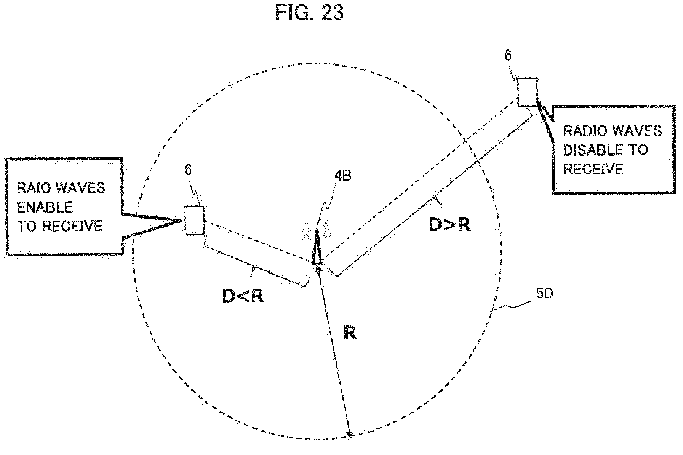

FIGS. 23 through 25 are explanatory diagrams of the estimation method 1. FIG. 23 illustrates a reception enabled case in which the wireless terminal 6 may receive the radio waves radiated from the small-cell base station 4B, and a reception disabled case. Generally, with a radio wave amplifying device like a booster not being prepared, the wireless terminal 6 may receive the radio waves from the small-cell base station 4B when a distance "D" from the small-cell base station 4B is within a radius "R" of the small-cell 5B. Conversely when the distance D from the small-cell base station 4B is larger than the cell radius R, the wireless terminal 6 is disabled from receiving the radio waves. Note that a reachable distance of the radio waves is considered to decrease depending on a terrain of the area in which to configure the small-cell 5B. However, an assumed idealistic propagation distance may encompass the actual radio wave reachable distance.

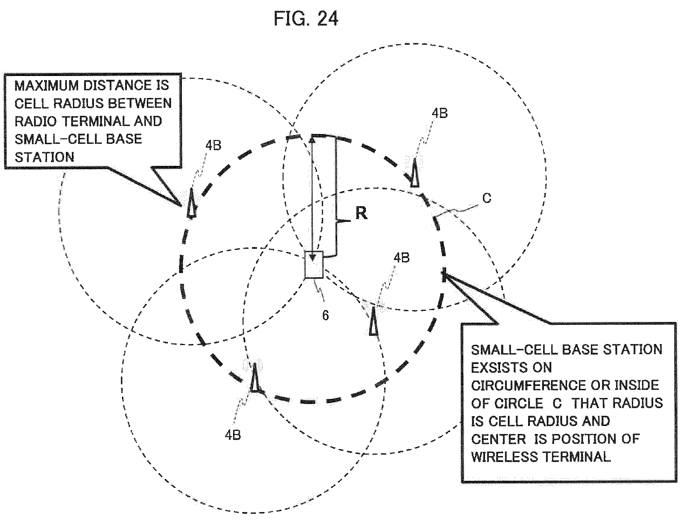

As depicted in FIG. 23, when the distance D is within the cell radius R, the wireless terminal 6 may receive the radio waves from the small-cell base station 4B. In other words, a maximum distance enabling the wireless terminal 6 to receive the radio waves from the small-cell base station 4B is the cell radius R. This implies that the small-cell base station 4B, as illustrated in FIG. 24, exists on a circumference or inwardly of a circle C being centered at the position of the wireless terminal 6 receiving the radio waves from the small-cell base station 4B and having a radius coincident with the cell radius R.

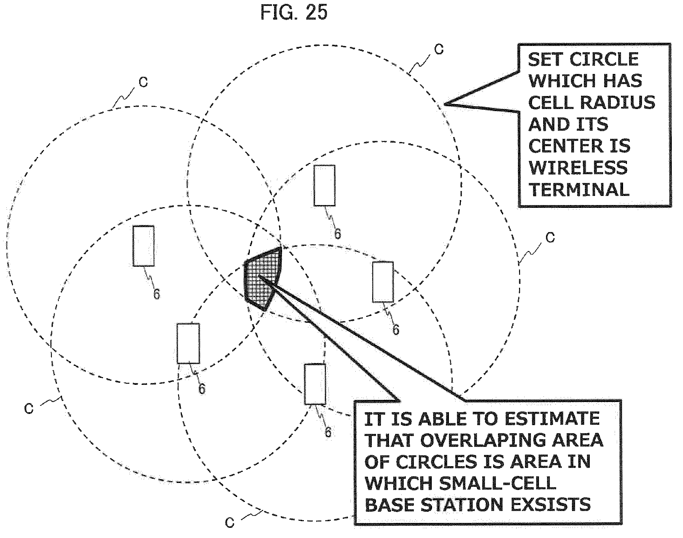

Accordingly, as depicted in FIG. 25, the small-cell base station 4B may be estimated to exist in an area (indicated by hatching in FIG. 25) overlapping circles C corresponding to the receiving positions of the radio waves from two or more small-cell base stations 4B. Thus, the estimation method 1 is capable of estimating the position of the small-cell base station 4B by using the two or more receiving positions of the radio waves and the cell radius.

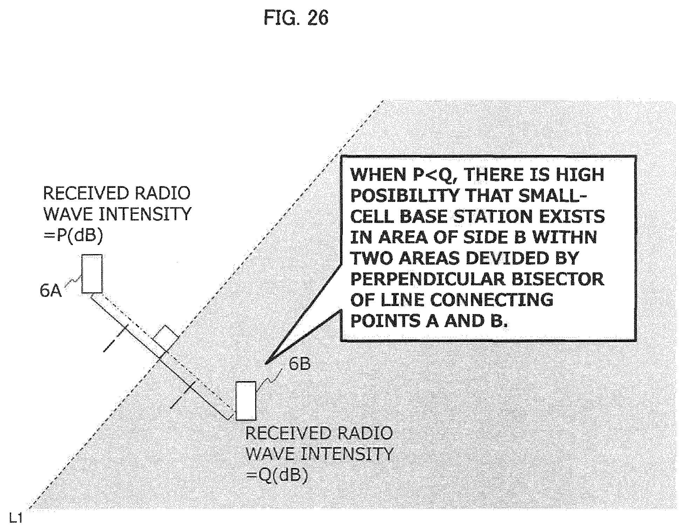

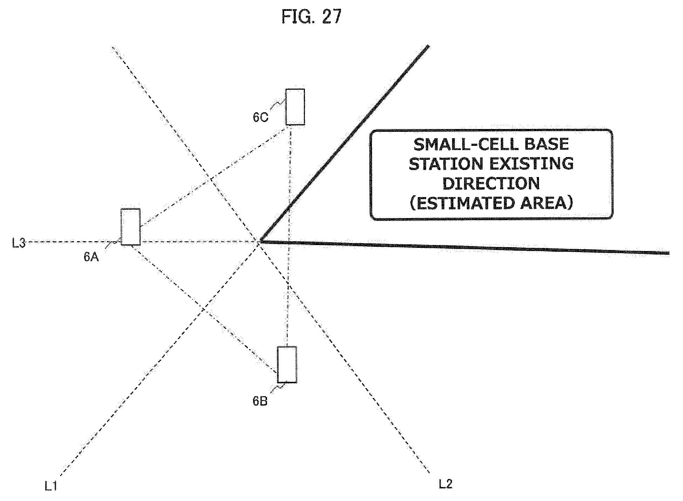

FIGS. 26 and 27 are explanatory diagrams of the estimation method 2. FIG. 26 illustrates an example in which the wireless terminal 6A and the wireless terminal 6B measure the intensities of the received radio waves from the small-cell base station 4B in positions different from each other. A hypothesis is that an intensity "P" of the radio waves received by the wireless terminal 6A is smaller than an intensity "Q" of the radio waves received by the wireless terminal 6B.

The estimation method 2 divides the area into a divided area to which the wireless terminal 6A (one (first) wireless terminal) belongs and a divided area to which the wireless terminal 6B (the other (second) wireless terminal) belongs at a boundary that is a perpendicular bisector L1 with respect to a straight line connecting the position of the wireless terminal 6A to the position of the wireless terminal 6B. The divided area (to which the wireless terminal 6B belongs in FIG. 26) on the larger side of the intensity of the received radio waves, is estimated to be the area covering the existence of the small-cell base station 4B.

FIG. 27 depicts a case a wireless terminal 6C (third wireless terminal) in addition to the wireless terminal 6A and the wireless terminal 6B illustrated in FIG. 26, measures an intensity (designated by "O") of the received radio waves in a position different from the positions of the positions of the wireless terminal 6A and the wireless terminal 6B.

In this case, divided areas with perpendicular bisectors L2, L3 being boundaries are obtained by using the positions of the wireless terminal 6A and the wireless terminal 6B and a position of the wireless terminal 6C, and the divided area on the existing side of the small-cell base station 4B is obtained. The small-cell base station 4B is estimated to exist in an area (a right upward portion depicted by a bold line in FIG. 27) overlapped with the divided area on the existing side of the small-cell base station 4B.

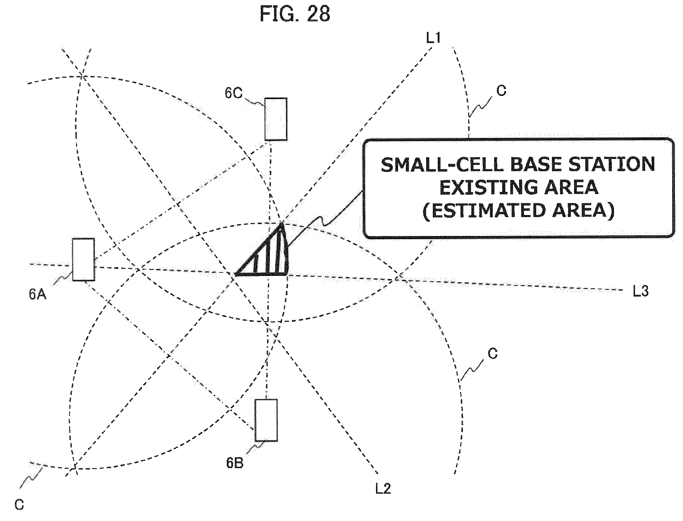

FIG. 28 illustrates a further example using the estimation method 1 with respect to the wireless terminals 6A, 6B, 6C depicted in FIG. 27. In this case, the area covering the existence of the small-cell base station 4B is estimated to be an area (indicated by hatching of bold lines in FIG. 28) in which to overlap the area (the estimated area by the estimation method 2) estimated by the estimation method 2 to cover the existence of the small-cell base station 4B with the area (in which to overlap the circles C) estimated by the estimation method 1 to cover the existence of the small-cell base station 4B.

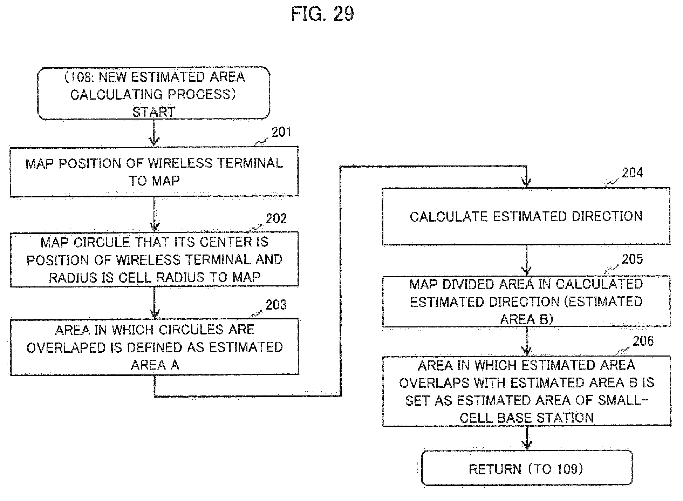

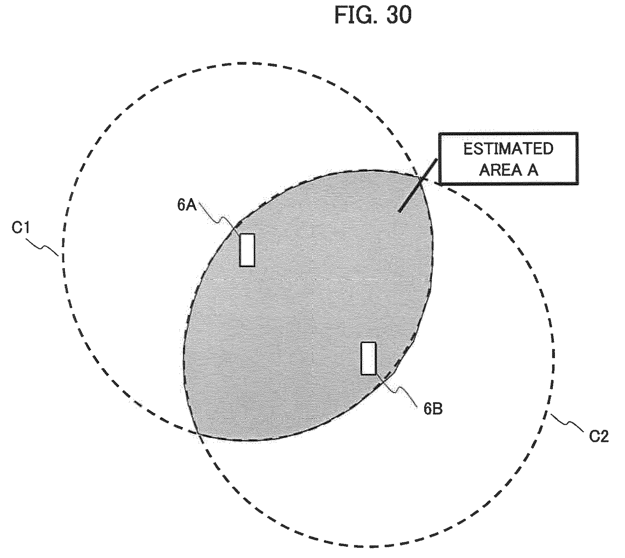

FIG. 29 is a flowchart illustrating details of the process (position estimating process) in 108 depicted in FIG. 21. FIG. 29 illustrates the position estimating process (new estimated area calculation process) when the processing advances to 108 from 106. This process is executed when two entries stored with the same small-cell ID (CGI) exist in the table 104A (when two sets of measurement result information are stored). The equipment IDs stored in the two entries may be the same and may also be different. FIGS. 30 through 32 are explanatory diagrams of the new estimated area calculation process (the process in FIG. 29).

The following discussion will describe a process of calculating the estimated area by using a computer graphics technology and a logic operation as one example. A raster graphics technology, a vector graphics technology and a combination thereof are applicable to the computer graphics technology. However, any existing computing technologies may be applied as far as the estimated area may be calculated. The following discussion will describe a process using the raster graphics technology employing a bitmap and the logic operation as merely one example.

In 201, the CPU 11 maps the position (a coordinate of the position) of the wireless terminal to a map that is previously stored in the auxiliary storage device 14. The map is, e.g., a bitmap indicating an area associated with an. The bitmap has a plurality of pixels arrayed in an orthogonal coordinate system. However, there may be available a map of the plurality of areas corresponding to the cell of the macro-cell base station and a map of the plurality of areas (FIG. 14) not depending on the cell.

The CPU 11 maps, to the map, the position of the wireless terminal 6 (set as the "wireless terminal 6A" for convenience of explanation) specific by the positional information in the entry registered in the table 104A in the process of 102 (FIG. 21). The CPU 11 further maps, to the map, the position of the wireless terminal 6 (set as the "wireless terminal 6B" for convenience of explanation) specific by the positional information in a different entry containing the same small-cell ID as the small-cell ID in the entry. Herein, the wireless terminal 6A and the wireless terminal 6B may be different and may also be the same. In other words, plural sets of measurement result information may be obtained by the plurality of wireless terminals 6 and may also be obtained by one wireless terminal 6.

Specifically, the CPU 11 executes a process of converting the positions (latitudes, longitudes), stored in the entries, of the wireless terminal 6A and the wireless terminal 6B into positions (coordinates) on the map (bitmap), and mapping the converted positions to the map.

Next, the CPU 11 maps, onto the map, circles being centered at the positions (two points), mapped onto the map, of the wireless terminal 6A and the wireless terminal 6B and having radii each coincident with the cell radius R (202). The cell radius involves using a cell radius previously stored in the auxiliary storage device 14 or the main storage device 12. However, the cell radius obtained from the intensity of the received radio waves may also be used.

Concretely, the CPU 11 converts the cell radius into a distance on the map (bitmap). Subsequently, the CPU 11 obtains an aggregation of pixels on the bitmap, corresponding to a circumference and an interior of the circumference of a circle C1 on the bitmap by using the position of the wireless terminal 6A on the bitmap and the cell radius (the distance on the bitmap) pertaining to the wireless terminal 6A. The CPU 11 further obtains an aggregation of pixels on the bitmap, corresponding to a circumference and an interior of the circumference of a circle C2 on the bitmap by using the position of the wireless terminal 6B on the bitmap and the cell radius (the distance on the bitmap) pertaining to the wireless terminal 6B.

Next, the CPU 11 sets an area having an overlap of the circles as an estimated area A (203). Specifically, the CPU 11 obtains a logical product (AND) of the pixel aggregation of the circle C1 and the pixel aggregation of the circle C2. The CPU 11 sets the pixel aggregation obtained by an arithmetic operation of the logical product (AND) as the estimated area A.

As illustrated in FIG. 30, the area having an overlap of the circle C1 being centered at the position of the wireless terminal 6A and having the cell radius R with the circle C2 being centered at the position of the wireless terminal 6B and having the cell radius R, is set as the estimated area A (204). The estimated area A is a first area obtained by the estimation method 1 described above.

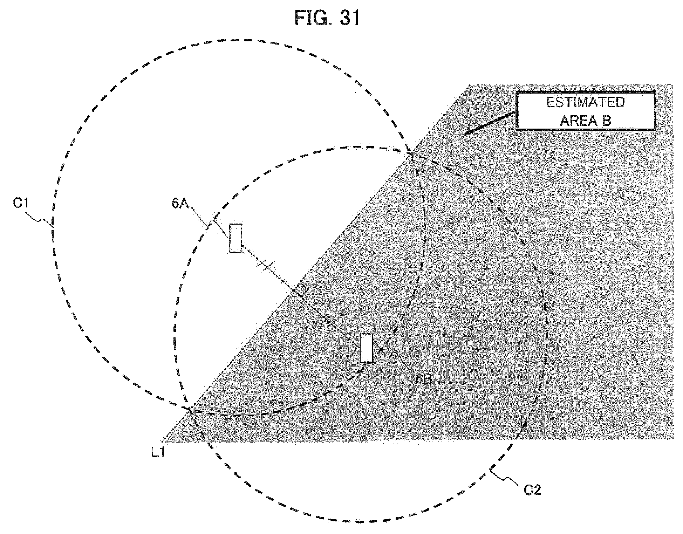

Next, in 204, as depicted in FIG. 31, the CPU 11 draws the perpendicular bisector L1 with respect to the straight line connecting the position of the wireless terminal 6A on the map (bitmap) to the position of the wireless terminal 6B, and obtains an area (set as a divided area L1-6A) on the side of the wireless terminal 6A and an area (a divided area L1-6B) on the side of the wireless terminal 6B with the perpendicular bisector L1 being a boundary.

Subsequently, the CPU 11 obtains an estimation direction by comparing the intensity of the received radio waves of the wireless terminal 6A with the intensity of the received radio waves of the wireless terminal 6B. A hypothesis in this example is that the intensity of the received radio waves of the wireless terminal 6B is larger than the intensity of the received radio waves of the wireless terminal 6A. The CPU 11 therefore estimates, as the estimation direction, that the small-cell base station 4B exists in a direction toward the wireless terminal 6B from the perpendicular bisector L1.

Next, the CPU 11 maps the area matching with the estimated direction onto the map (205). To be specific, the CPU 11 obtains the pixel aggregation corresponding to the divided area L1-6A on the side of the wireless terminal 6A having the larger intensity of the received radio waves in the divided area L1-6A and the divided area L1-6B, and sets the obtained pixel aggregation as an estimated area B. The estimated area B is a second area obtained by the estimation method 2 described above.

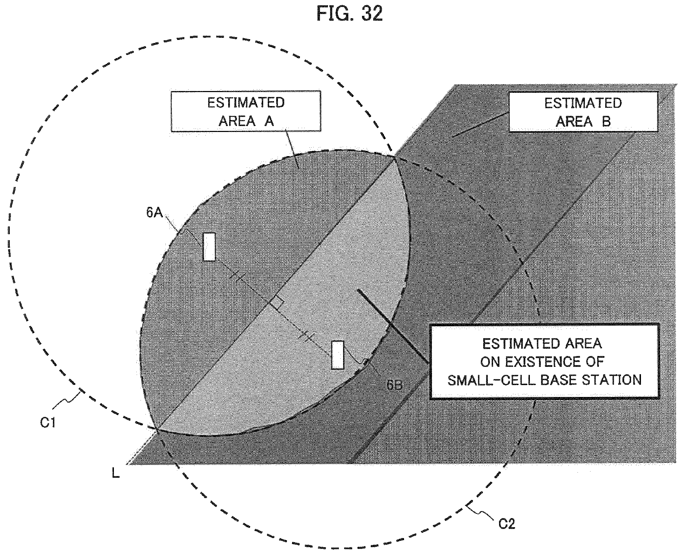

As illustrated in FIG. 32, the CPU 11 determines an area (indicated by dark hatching) having an overlap of the estimated area A with the estimated area B to be an objective estimated area (the area estimated to cover the existence of the small-cell base station 4B (small-cell base station existence estimated area)) (206). Specifically, the CPU 11 obtains a logical product of the pixel aggregation of the estimated area A and the pixel aggregation of the estimated area B, and leaves the obtained pixel aggregation as the objective estimated area on the bitmap.

Thereafter, the processing advances to 109 in FIG. 21, and the CPU 11 stores, in the small-cell DB 105, data (the positional information of the small-cell base station 4B) of the map (bitmap) to which the small-cell base station existing area is mapped. Upon finishing the process in 109, the processing loops back to 101.

Note that the map (bitmap) to which the small-cell base station existence estimated area is mapped may be prepared per small-cell base station, and the plurality of small-cell base station existence estimated areas may also be mapped onto one map. The processes in 202, 203 and the processes in 204, 205 may be reversed in their execution sequences and may also be executed in parallel. The intensities of the received radio waves are compared with each other while omitting the calculation of the perpendicular bisector L1 in 204, and the divided areas may be mapped as well as calculating the perpendicular bisector L1 in 205. Alternatively, the processes in 204, 205 may also be aggregated as a series of processes.

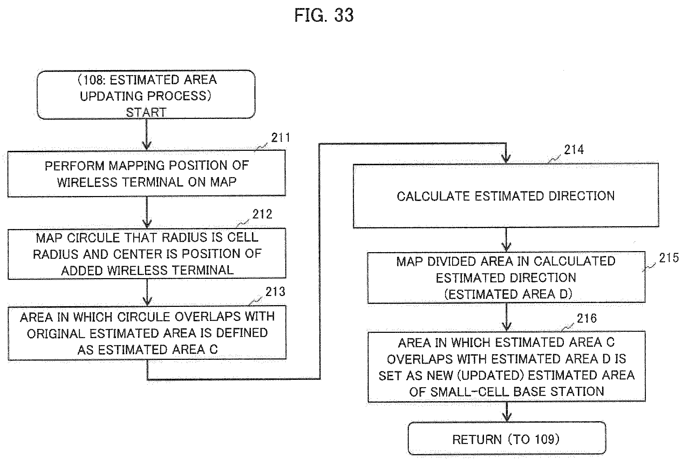

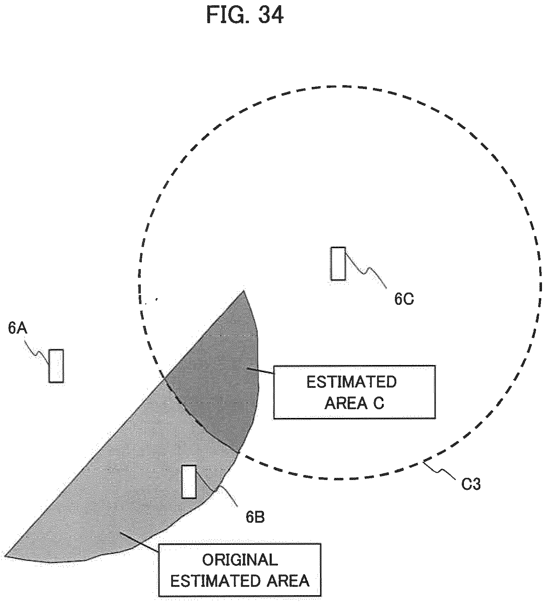

FIG. 33 is a flowchart illustrating details of the process (position estimating process) in 108 depicted in FIG. 21. FIG. 33 depicts the position estimating process (estimated area update process) when the processing advances to 108 from 107 (when updating the estimated area). This process is executed when the map (bitmap) containing the description of the small-cell base station existence estimated area is stored in the small-cell DB 105 and when the table 104A contains three or more entries stored with the same small-cell ID (when three or more sets of measurement result information are stored). FIGS. 34 through 36 are explanatory diagrams of the estimated area update process (process in FIG. 33).

An example to be described as below assumes a case in which the map (bitmap) containing the description of the estimated area of the small-cell base station 4B illustrated in FIG. 32 is stored in the small-cell DB 105, and a new set of measurement result information with respect to the small-cell base station 4B is stored in the table 104A.

The wireless terminal 6 transmitting the measurement result information is to be the wireless terminal 6C different from the wireless terminal 6A and the wireless terminal 6B for convenience of explanation. The wireless terminal 6C may, however, be the same as at least one of the wireless terminal 6A and the wireless terminal 6B. A specific processing technique (of using a coordinate conversion, the distance conversion, a pixel calculation, the logical operation, and the cell radius) for the processes to be described below, is the same processing technique explained by using FIG. 29, and hence its description is omitted.

In 211, the CPU 11 reads the map (bitmap) containing a description of the latest estimated area (original estimated area) of the small-cell base station 4B from the small-cell DB 105, and maps the positions of the wireless terminals 6A, 6B onto this map. In 109, however, when the map (bitmap) to which the positions of the wireless terminal 6A and the wireless terminal 6B are mapped is stored in the small-cell DB 105, the mapping of the positions of the wireless terminal 6A and the wireless terminal 6B is omitted.

Next, the CPU 11 maps, onto the map (bitmap), a circle C3 being centered at the position of the wireless terminal 6C and having the cell radius coincident with the cell radius R prepared beforehand (212). The map (bitmap) thereby comes to a status illustrated in FIG. 34. Next, the CPU 11 sets an area in which to overlap the original estimated area with the circle C3 as the estimated area C estimated by the estimation method 1 (213).

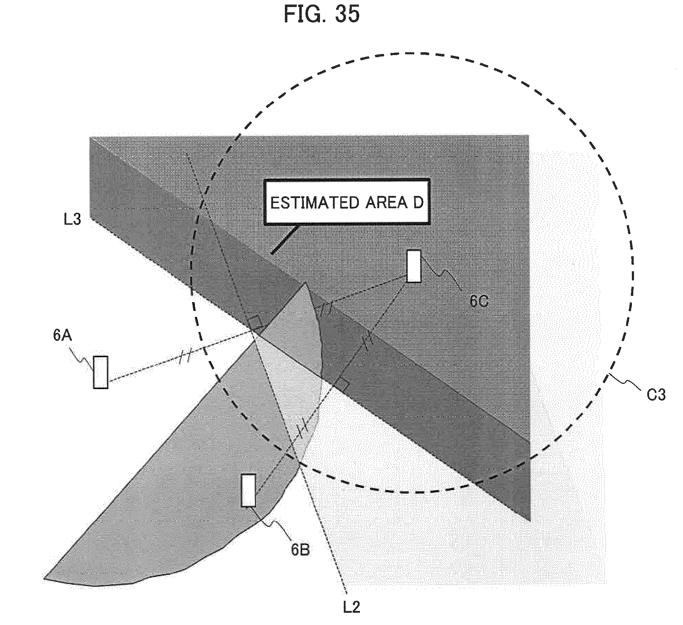

In next 214, the CPU 11 executes the following processes. The CPU 11 obtains, as illustrated in FIG. 35, divided areas by using perpendicular bisectors L2, L3 connecting the position of the wireless terminal 6C to the positions of the wireless terminals 6A, 6B. Subsequently, the CPU 11 estimates an existing direction of the small-cell base station 4B by comparing the intensity of the received radio waves in the position of the wireless terminal 6A with the intensity of the received radio waves in the position of the wireless terminal 6C. A hypothesis is that the intensity of the received radio waves in the position of the wireless terminal 6C is larger than the intensity of the received radio waves of the wireless terminal 6A. The direction of the wireless terminal 6C is therefore estimated as the existing direction of the small-cell base station 4B.

Similarly, the CPU 11 estimates the existing direction of the small-cell base station 4B by comparing the intensity of the received radio waves in the position of the wireless terminal 6B with the intensity of the received radio waves in the position of the wireless terminal 6C. It is presumed that the intensity of the received radio waves in the position of the wireless terminal 6C is larger than the intensity of the received radio waves of the wireless terminal 6B. Hence, the direction of the wireless terminal 6C is estimated as the existing direction of the small-cell base station 4B.

In 215, the CPU 11 maps the divided area matching with the estimated direction onto the map. The map is divided, with the perpendicular bisector L2 being the boundary, a divided area L2-6A on the side of the wireless terminal 6A and a divided area L2-6C on the side of the wireless terminal 6C. The map is further divided, with the perpendicular bisector L3 being the boundary, a divided area L3-6B on the side of the wireless terminal 6B and a divided area L3-6C on the side of the wireless terminal 6C. Directions matching with the perpendicular bisector L2 and the perpendicular bisector L3 converge at the direction of the wireless terminal 6C. Accordingly, the CPU 11 sets an area having an overlap of the divided area L2-6C with the divided area L3-6C as an estimated area D estimated by the estimation method 2.

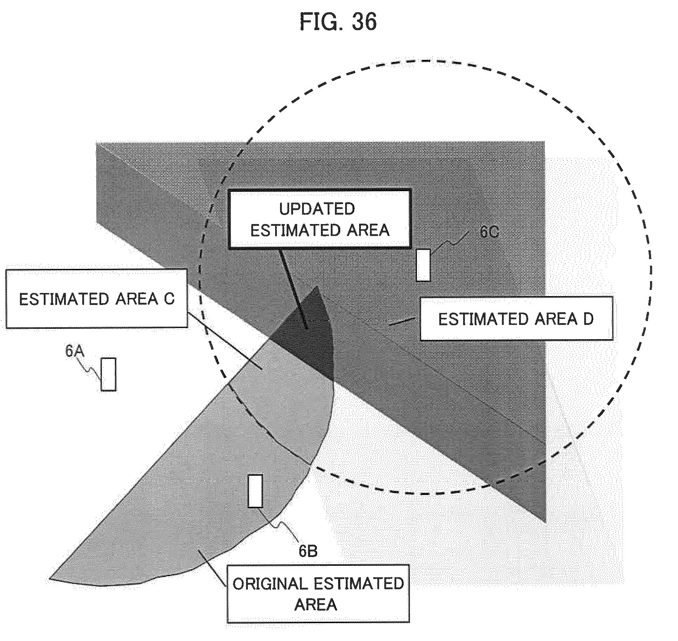

In next 216, the CPU 11, as illustrated in FIG. 36, determines (updates) an area (indicated by dark hatching) having an overlap of the estimated area C with the estimated area D as a new existence estimated area of the small-cell base station 4B. thereafter, the processing advances to 109 in FIG. 21, and the CPU 11 stores (overwrites) information of the map containing the updated small-cell base station existing area in the small-cell DB 105. Thus, the estimated position of the small-cell base station 4B is updated. Upon finishing the process in 109, the processing loops back to 101.

Note that the processes in 212, 213 and the processes in 214, 215 may be reversed in their execution sequences and may also be executed in parallel. The intensities of the received radio waves are compared with each other while omitting the calculations of the perpendicular bisectors L2, L3 in 214, and the divided areas may be mapped as well as calculating the perpendicular bisectors L2, L3 in 215. Alternatively, the processes in 214, 215 may also be aggregated as a series of processes.

As will be understood from the processes illustrated in FIGS. 29 and 33, the divided area selection process is executed at least once corresponding to the number (the number of positions) of the same small-cell IDs registered in the table 104A. To be specific, the divided area selection process is executed once (see FIG. 31) when the number of positions is "2" and is executed twice when the number of positions is "3" (see FIG. 35).

The processes illustrated in FIG. 33 are executed each time the measurement result information containing the small-cell ID is registered in the table 104A. When the new measurement result information with respect to the small-cell base station 4B is registered, the positional information (estimated area) of the small-cell base station 4B is updated through the processes in FIG. 33. Thus, the estimated area is repeatedly updated till the estimated area reaches the predetermined range (equal to or smaller than the threshold value).

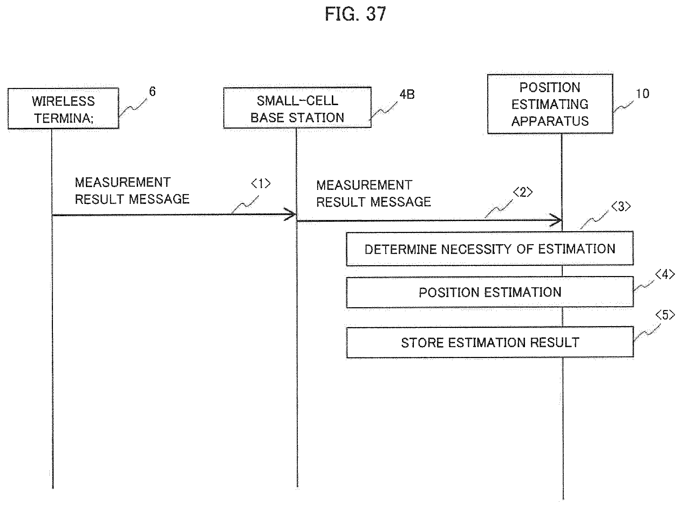

FIG. 37 is a sequence diagram pertaining to estimating the position. The measurement result message transmitted from the wireless terminal 6 is received by the position estimating apparatus 10 via the small-cell base station 4B (FIG. 37<1>, <2>). The position estimating apparatus 10 determines whether the position estimation is required in accordance with contents of the measurement result message (FIG. 37<3>). When determining that the position estimation is required, the position estimating apparatus 10 executes the position estimating process (FIG. 37<4>), and stores a result of the position estimation (FIG. 37<5>).

### <Operational Effect of Embodiment>

In the embodiment discussed above, the CPU 46 (one example of the control apparatus) of the wireless terminal 6 monitors the throughput (one example of the communication quality) during the communications with the macro-cell base station 2. The CPU 46 executes a process of transmitting the query message to the position estimating apparatus 10 (one example of the information processing apparatus) upon detecting the decrease in throughput. Thereafter, the wireless terminal 6 starts the radio measurement process (measuring process) when receiving the response message (measurement instruction) from the position estimating apparatus 10.

Thus, the measuring process is started by using the detection of the decrease in throughput as one of triggers, thereby enabling the measuring process to be started in the position having a high probability that the wireless terminal 6 may receive the radio waves from the small-cell base station. The futile measuring process may thereby avoid being executed as compared with the case of executing the measuring process at a certain frequency irrespective of the existing possibility of the small-cell base station. In other words, the power consumption of the wireless terminal due to the measuring process may be reduced.

In the embodiment, the wireless terminal 6 starts the measuring process when obtaining the measurement instruction as the response to the query. The wireless terminal 6 is thereby enabled to start the measuring process in a state of further enhancing the probability that the wireless terminal 6 may receive the radio waves from the small-cell base station.

In the embodiment, the CPU 46 of the wireless terminal 6 transmits, to the position estimating apparatus 10, the measurement result message (measurement result information) containing the small-cell ID when obtaining this small-cell ID (one example of the identifier of the small-cell base station) from the radio waves received from the small-cell base station 4B in the measuring process.

In other words, the wireless terminal 6 sends, to the position estimating apparatus 10 (one example of a query destination information processing apparatus), the small-cell ID of the small-cell base station 4B as the information indicating the existence of the small-cell base station 4B. The position estimating apparatus 10 is thereby enabled to execute the determination with respect to whether the measurement instruction (one example of an execution instruction) is transmitted in response to the query, based on whether the small-cell ID exists.

Note that the measurement result message may be transmitted to one or more other information processing apparatuses, and the position estimating apparatus 10 may access and employ the small-cell ID saved in one or more other information processing apparatuses as the information indicating the existence of the small-cell base station 4B.

In the embodiment, the CPU 11 (one example of the control apparatus) of the position estimating apparatus 10 (one example of the information processing apparatus) stores the table 105A (one example of the information for determination) with respect to the query, and executes the processes illustrated in FIG. 12. The CPU 11, in the determinations in 003 and 006, executes the process of transmitting the measurement instruction (execution instruction) when satisfying the determination condition but does not execute the transmission process whereas when not.

Thus, in the embodiment, the position estimating apparatus 10 executes the process of transmitting the measurement instruction when the information for determination satisfies the predetermined condition but avoids the process of transmitting the measurement instruction when not satisfying the predetermined condition. The wireless terminal 6 is thereby provided with the limit to executing the measuring process, and hence the power consumption of the wireless terminal 6 due to the measuring process may be reduced.

In the embodiment, in the determination in 003 in the position estimating apparatus 10, the CPU 11 refers to the table 105A, and executes the measurement instruction transmitting process on condition that the query reception count in the area, to which the position of the wireless terminal 6 belongs, does not reach the threshold value (one example of when satisfying the predetermined condition). The position estimating apparatus 10 may grasp the existence of the small-cell base station in the area concerned when the measurement result message contains the intensity of the received radio waves and the small-cell ID (one example of the information contingent to the reception of the radio waves).

In the embodiment, the CPU 11 of the position estimating apparatus 10 executes the measurement instruction transmitting process when the query reception count in the area, to which the position of the wireless terminal 6 belongs, reaches the threshold value and when the small-cell ID is stored (one example of when satisfying the predetermined condition). The wireless terminal 6 is thereby enabled to carry out the measuring process on the premise that the small-cell base station 4B exists, and to execute the wireless measurement by receiving the radio waves from the small-cell base station 4B

While on the other hand, when the query reception count reaches the threshold value but when the small-cell ID is not stored (one example of when not satisfying the predetermined condition), the CPU 11 does not execute the process of transmitting the response message. The downlink traffic is reduced by avoiding the transmission of the response message.

In the embodiment, when the "small-cell ID" is contained in the measurement result message received by the position estimating apparatus 10, this small-cell ID is stored in the "existing small-cell ID" in the entry associated with the area concerned. In other words, the identifier of the small-cell base station is contained as the information indicating the existence of the small-cell base station in the area concerned. A necessity of the static setting of the information for determination is thereby eliminated. As a matter of course, the stored content of the "small-cell ID" in the table 105A may be updated by the static setting.

In the embodiment, the position estimating process is executed by using the estimation method 1 and the estimation method 2 described above. It is thereby feasible to acquire the position estimated result having the more improved accuracy than by the technologies of Patent documents 1, 2.

The embodiment may be, however, modified to execute the estimation 1 without carrying out the estimation method 2 and to store the result of the estimation method 1 as a result of estimating the position of the small-cell base station. To be specific, in the processes illustrated in FIG. 29, the estimated area A obtained in 203 is set as the objective estimated area while omitting the processes in 204 - 206. Alternatively, in the processes illustrated in FIG. 33, the estimated area C obtained in 213 is set as the objective estimated area while omitting the processes in 214 - 216. The estimation method 1 is capable of estimating the position of the small-cell base station without using the intensity of the received radio waves.

In the embodiment, when the planar dimension of the estimated area of the small-cell base station becomes equal to or smaller than (may also be less than) the predetermined value, the execution of the position estimating process is stopped. Thus, when the planar dimension of the estimated area is reduced down to the size conforming with the usage purpose of the estimated area, the futile position estimating process may be avoided. It is therefore feasible to restrain dissipation of the calculation resources (CPU resources) of the position estimating apparatus 10 (information processing apparatus).

### <Modified Example>

In the embodiment discussed above, the information processing apparatus operating as the position estimating apparatus 10 executes both of the process pertaining to the query and the position estimating process. The embodiment has described the example that the position estimation assist application for exchanging the messages between the wireless terminal 6 and the position estimating apparatus 10 is installed into the wireless terminal 6, in which the query message, the response message and the measurement result message are exchanged as the user data between the wireless terminal 6 and the position estimating apparatus 10.

For example, the processes (operation) executed by the position estimating apparatus 10 may also be carried out by the S-GW8 or the P-GW9. The hardware configuration of the position estimating apparatus 10 may be applied to the hardware configuration of each of the S-GW 8 and the P-GW9. The CPU of the S-GW 8 or the P-GW 9 may operate as the mobile terminal information receiving unit 101, the query transmitting/receiving unit 102 and the small-cell position estimating unit 103 illustrated in FIG. 7. The S-GW8 or the P-GW9 implements the mobile equipment DB 104 (table 104A) and the small-cell DB 05 (table 105A).

In other words, the processes (operation) carried out by the position estimating apparatus 10 may be executed by the information processing apparatus connected to the external network, and may also be executed by the information processing apparatus disposed in the carrier network 1.

Accordingly, the embodiment may be modified so that the processes (operation) carried out by the position estimating apparatus 10 are contrived to be an operation performed by, e.g., the MME 7 in the carrier network 1. The MME 7 has the hardware configuration of the information processing apparatus as illustrated in, e.g., FIG. 6, and the CPU 11 of the MME 7 may operate as the mobile terminal information receiving unit 101, the query transmitting/receiving unit 102 and the small-cell position estimating unit 103 depicted in FIG. 7. The mobile equipment DB 104 (table 104A) and the small-cell DB 05 (table 105A) are also implemented by the MME 7. In this case, the query message, the response message and the measurement result message are dealt with as the control signals on the C-plane, which are transmitted and received between the wireless terminal 6 and the MME 7.

The embodiment may be further modified so that the base station apparatus (macro-cell base station 2) executes the operation of the position estimating apparatus 10. In this case, the CPU 25 (FIG. 4) of the macro-cell base station 2 operates as the mobile terminal information receiving unit 101, the query transmitting/receiving unit 102 and the small-cell position estimating unit 103 illustrated in FIG. 7. The mobile equipment DB 104 (table 104A) and the small-cell DB 05 (table 105A) are stored in the CF 23 or the memory 28. In this case also, the query message, the response message and the measurement result message are dealt with as the control signals on the C-plane, which are transmitted and received between the wireless terminal 6 and the macro-cell base station 2. The measurement result message is transmitted to the macro-cell base station 2 in, e.g., the handover process (FIG. 19<7>).

The embodiment may adopt a configuration that the first information processing apparatus executes the process (FIG. 17) pertaining to the query, and one or more other information processing apparatuses (second information processing apparatus) different from the first information processing apparatus executes the position estimating process (FIG. 37). For example, the embodiment may adopt a configuration that the first information processing apparatus and the second information processing apparatus are connected to the external network.

At least one of the first information processing apparatus and the second information processing apparatus may be at least one of S-GW8 and the P-GW9. Alternatively, the first information processing apparatus may also be the MME 7 and the macro-cell base station 2.

For instance, the following configuration may be adopted. The MME 7 or the macro-cell base station 2 defined as the first information processing apparatus implements the mobile equipment DB 104 (table 104A) and the small-cell DB 05 (table 105A), and thereby operates as the mobile terminal information receiving unit 101 and the query transmitting/receiving unit 102. On the other hand, the position estimating apparatus 10 defined as the second information processing apparatus accesses (refers to) the tables 104A and 105A via the external network, and executes the processes of the small-cell position estimating unit 103.

Alternatively, the following modifications are also feasible. To be specific, the MME 7 or the macro-cell base station 2 carries out the process of receiving the query message and the measurement result message, and the process of transmitting the response message (measurement instruction). The position estimating apparatus 10 monitors the reception of the query message and the measurement result message in the MME 7 via the external network, and executes the processes in FIG. 12 when the MME 7 receives the query message. The position estimating apparatus 10 gives the MME 7 an instruction of transmitting the measurement instruction corresponding to the processing result in FIG. 12. The position estimating apparatus 10 executes also the processes in FIG. 21 when the MME 7 receives the measurement result message.

Furthermore, the configurations described in the embodiment may be properly combined.

### [Description of the reference numerals]

- 2...: macro-cell base station
- 3...: macro-cell
- 4...: small-cell base station
- 5...: small-cell
- 6...: wireless terminal
- 10...: position estimating apparatus
- 11, 46...: CPU
- 12...: main storage device
- 14...: auxiliary storage device
- 46...: flash memory
- 47...: memory

## Claims

1. A wireless terminal, comprising:
a controller to execute a process of monitoring a communication quality in communications using a macro-cell base station, a process of transmitting, to an information processing apparatus, a query with respect to whether a radio measurement process relating to a small-cell base station is necessary when it is detected that the communication quality is degraded to a predetermined range, and the radio measurement process being started when an execution instruction of the radio measurement process is received from the information processing apparatus.

2. The wireless terminal according to claim 1, wherein the controller transmits result information of the radio measurement process including an identifier of an small-cell base station to the information processing apparatus or one or more other information processing apparatuses when the identifier of the small-cell base station is obtained from radio waves is received from the small-cell base station in the radio measurement process.

3. An information processing apparatus, comprising:
a storage device to store, per area, information for determination whether a radio measurement process pertaining to a small-cell base station is necessary; and
a controller to determine whether information for determination with respect to an area in which a wireless terminal, which detects that a communication quality in communications using a macro cell base station is degraded to a predetermined range, belongs to satisfies a predetermined condition when a query with respect to a necessity of the radio measurement process from the wireless terminal, to execute a process of transmitting an execution instruction of the radio measurement process to the wireless terminal when the predetermined condition is satisfied, and to avoid the process of transmitting the execution instruction when the predetermined condition is not satisfied.

4. The information processing apparatus according to claim 3, wherein the controller executes the process of transmitting the execution instruction when times of reception of the query with respect to the area in which the wireless terminal belongs to does not reach a predetermined value, the times of reception of query being included in the information for determination with respect to the area in which the wireless terminal belongs to.

5. The information processing apparatus according to claim 3, wherein the controller executes a process of transmitting the execution instruction when the information for determination with respect to the area in which the wireless terminal belongs to includes information indicating existence of a small-cell base station in the area, and avoids the process of transmitting the execution instruction when the information for determination indicates non-existence of a small-cell base station in the area.

6. The information processing apparatus according to claim 5, wherein when a result of the radio measurement process including identifier of a small-cell base station from a wireless terminal that executed the radio measurement process according to the execution instruction, the controller includes the identifier of the small-cell base station in information for determining of an area in which the wireless terminal belongs to, as information indicating existence of the small-cell base station in the area.

7. The information processing apparatus according to claim 3, wherein a plurality of results of the radio measurement process is stored in the storage device, the plurality of results being received from one or two or more wireless terminals, each of which receives the execution instruction; and
the plurality of results of the radio measurement process stored in the storage device are referred by one or more other information processing apparatuses to execute a process of estimating a position of a small-cell base station.

8. The information processing apparatus according to claim 3, wherein a plurality of results of the radio measurement process is stored in the storage device, the plurality of results being received from one or two or more wireless terminals, each of which receives the execution instruction; and
the controller executes a position estimating process of a small-cell base station using the plurality of results of the radio measurement process stored in the storage device.

9. The information processing apparatus according to claim 8, wherein each of the plurality of results of the radio measurement process includes a position in which radio waves form the small-cell base station are received by a wireless terminal; and
the controller estimates that an area in which a plurality of circles overlap is an area in which the small-cell base station exists, wherein a center of each of the plurality of circles is each of the received position of the radio waves included in the plurality of results, and a radius of each of the plurality of circles is a cell radius of the small-cell base station.

10. The information processing apparatus according to claim 8, wherein each of the plurality of results of the radio measurement process includes at least intensity of radio waves that a wireless terminal receives from the small-cell base station, and
the controller estimates that an overlapping area in which an area that a plurality of circles overlap is overlapped with one or more divided areas is an area in which the small-cell base station exists, wherein a center of each of the plurality of circles is each of the measured positions of the intensity of the radio waves included in the plurality of results of the radio measurement process, a radius of each of the plurality of circles is a cell radius of the cell radius of the small-cell base station,
wherein the one or more divided areas are obtained by:
calculating two divided areas is a perpendicular of a straight line connected with two positions selected from the measured positions of the radio waves is a boundary; and
selecting one of the two divided areas having stronger intensity of the radio waves within two intensity of the radio waves corresponding to the two positions, the selecting being repeated one or more times based on the number of the measured positions.

11. The information processing apparatus according to any one of claims 8 - 10, wherein estimated area information indicating an area in which existence of the small-cell base station is estimated is stored in the storage device, wherein the estimated area information is obtained by a result of the position estimating process; and
the controller determines whether a size of the estimated area stored in the storage device is smaller than a predetermined value when the result of the radio measurement process is received, avoids executing the position estimating process when the size of the estimated area is smaller than the predetermined value, or executes the position estimating process.
